# EUROPEAN PATENT APPLICATION

(11) **EP 4 421 130 A1**
(43) Date of publication of application: **28.08.2024**
(21) Application number: 22883594.8
(22) Date of filing: 19.10.2022
(51) Int. Cl.: C08L 101/00, C08K 5/00, C08K 5/13, C08K 5/1535, C08K 5/51, C08L 33/06, C08L 45/00, C08L 67/00, C08L 69/00

(54) **THERMOPLASTIC RESIN COMPOSITION, MOLDED ARTICLE, AND METHOD FOR PRODUCING AND METHOD FOR IMPROVING TRANSMITTANCE OF THERMOPLASTIC RESIN COMPOSITION**

(30) Priority: 22.10.2021 JP 2021173347
(71) Applicant: MITSUBISHI GAS CHEMICAL COMPANY, INC., Chiyoda-ku Tokyo 100-8324 (JP)
(72) Inventor: KATO Noriyuki, Tokyo 100-8324 (JP); NISHIMORI Katsushi, Tokyo 125-8601 (JP); IKEDA Shinya, Niigata-shi, Niigata 950-3121 (JP); MOTEGI Atsushi, Tokyo 125-8601 (JP); MURATA SUZUKI Shoko, Tokyo 125-8601 (JP); OCHI Noriaki, Tokyo 125-8601 (JP); KANDA Masahiro, Tokyo 100-8324 (JP); NAGAI Masayuki, Hiratsuka-shi, Kanagawa 254-0016 (JP); MORISHITA Takami, Hiratsuka-shi, Kanagawa 254-0016 (JP); IKEDA Shinichi, Hiratsuka-shi, Kanagawa 254-0016 (JP); OMURA Kazufumi, Ashigarakami-gun, Kanagawa 258-8577 (JP)
(74) Representative: Hoffmann Eitle
(86) International application number: PCT/JP2022/038889
(87) International publication number: WO 2023/068290

(57) **Abstract**

Provided are a thermoplastic resin composition and the like that enable suppression of a change in transmittance such as when an additive is added, in particular, a change in transmittance in the short wavelength range. This thermoplastic resin composition contains a compound agent represented by general formula (1). (In general formula (1), R₁-R₅ each independently represent a hydrogen atom, an alkyl group or an alkoxy group having a total of 1-20 carbon atoms and optionally having a substituent group, or a structural formula of general formula (1-1). However, at least one of R₁-R₅ represents the structural formula of general formula (1-1), R₆-R₉ each independently represent a hydrogen atom, or an alkyl group or an alkoxy group having a total of 1-20 carbon atoms and optionally having a substituent group, and R₁₀ represents a hydrogen atom or an alkyl group having a total of 1-5 carbon atoms.) (In general formula (1-1), Rn-Ris, R₂₀, L, *, and ** are each described in the description of the present application.)

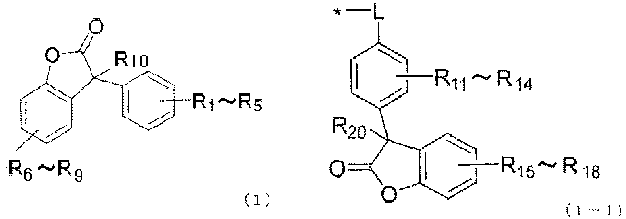

## Description

### TECHNICAL FIELD

The present invention relates to a thermoplastic resin composition and the like. More particularly, the present invention relates to a thermoplastic resin composition suitable for use as an optical material, a molded article containing the thermoplastic resin composition, a method for producing the thermoplastic resin composition, a method for improving transmittance, and the like.

### BACKGROUND ART

Conventionally, additives such as an antioxidant and a mold release agent are added to a thermoplastic resin to ensure stability and mold release properties during processing. For example, addition of an antioxidant to a resin is known to improve stability during processing (e.g., Patent literature 1 and 2).

However, addition of such additives sometimes impairs the intrinsic performance of the resin. For example, in a thermoplastic resin used as an optical material, addition of an additive has a problem of reducing the transmittance in the short-wavelength range, which is extremely critical.

A slight change in the transmittance of a thermoplastic resin as an optical material in the short-wavelength range may have a significant impact on the commercialized product. Therefore, there has been a need for a resin composition that can maintain the intrinsic transmittance of its thermoplastic resin as an optical material even after the manufacturing process, but a composition in which changes in the transmittance is suppressed in a reliable manner has not been realized.

### PRIOR ART DOCUMENTS

### PATENT DOCUMENTS

Patent literature 1: Japanese Unexamined Patent Application Publication No. H7-233160
Patent literature 2: WO99/67232

### SUMMARY OF THE INVENTION

### PROBLEMS TO BE SOLVED BY THE INVENTION

The main objective of the invention includes providing a thermoplastic resin composition, for example, a thermoplastic resin composition suitable for use as an optical material, in which changes in transmittance, especially changes in transmittance in the short-wavelength range, can be suppressed even with the addition of additives for the manufacturing process, and else.

### MEANS FOR SOLVING THE PROBLEMS

The present inventors have found that a thermoplastic resin composition containing a certain lactone-based compound maintains good transmittance, especially in the short-wavelength range, even in the presence of additives.

The present invention includes the following.
<1> A thermoplastic resin composition comprising a compounding agent represented by General formula (1) below: 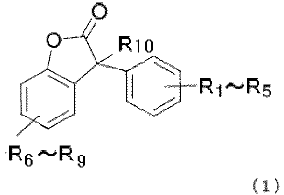
   (in General formula (1),
   R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
   R₆-R₉ each independently represent a hydrogen atom, or an optionally substituted alkyl or alkoxy group having a total of 1-20 carbon atoms, and
   R₁₀ represents a hydrogen atom or an alkyl group having a total of 1-5 carbon atoms); 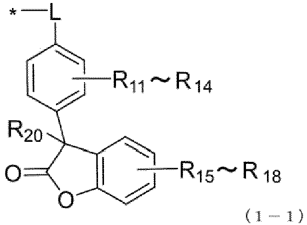
   (in General formula (1-1),
   R₁₁₋R₁₈ each independently represent a hydrogen atom, or an optionally substituted alkyl or alkoxy group having a total of 1-20 carbon atoms,
   L is a moiety represented by General formula (L1) or (L2) below: 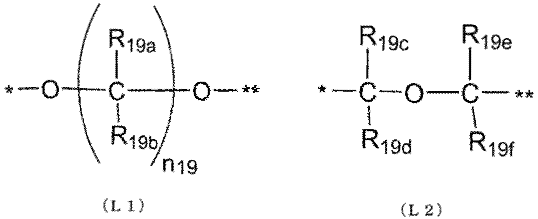
   (in Formula (L1),
   R₁₉ₐ and R_{19b} each independently represent a hydrogen atom, or an alkyl or alkoxy group having a total of 1-20 carbon atoms, and
   n₁₉ represents an integer from 1 to 12, and when n₁₉ is an integer from 2 to 12, the plurality of R₁₉ₐ may be the same or different substituents and the plurality of R_{19b} may be the same or different substituents,
   in Formula (L2),
   R_{19c}, R_{19d}, R₁₉ₑ, and R₁₉f each independently represent a hydrogen atom, or an alkyl or alkoxy group having a total of 1-20 carbon atoms,
   in Formulae (L1) and (L2),
   * each represent the position of bonding with the benzene ring containing R₁-R₅ in Formula (1) above, and
   ** each represent the position of bonding with the benzene ring containing R₁₁-R₁₄ in Formula (1-1) above),
   R₂₀ represents a hydrogen atom or an optionally substituted alkyl group having a total of 1-5 carbon atoms, and
   * represents the position of bonding with the benzene ring containing R₁-R₅ in Formula (1) above.)
<2> The thermoplastic resin composition according to <1> above, further comprising an antioxidant.
<3> The thermoplastic resin composition according to <2> above, wherein the antioxidant is a phenolic antioxidant and/or a phosphite-based antioxidant.
<4> The thermoplastic resin composition according to either one of <2> and <3> above, wherein the antioxidant is contained in an amount of 1-3,000 ppm by weight based on the total weight of the resin composition.
<5> The thermoplastic resin composition according to any one of <1> to <4> above, wherein the compounding agent is contained in an amount of 1-2,000 ppm by weight based on the total weight of the resin composition.
<6> The thermoplastic resin composition according to any one of <1> to <5> above, wherein the value of transmittance (%) at a wavelength of 370-400 nm in accordance with JIS K7105 is higher, by 2.0 (%), than that of a reference resin composition having the same composition but without the compounding agent.
<7> The thermoplastic resin composition according to any one of <1> to <6> above, wherein the value of transmittance (%) at a wavelength of 370-400 nm in accordance with JIS K7105 is 1.1 times or more higher than that of a reference resin composition having the same composition but without the compounding agent.
<8> The thermoplastic resin composition according to any one of <1> to <7> above, wherein:
   the amount of a volatile component produced when heated at 250°C for 5 minutes is less than that of a reference resin composition having the same composition but without the compounding agent; and
   the volatile component is any of formaldehyde, acetaldehyde, acetone, 2,3-butanedione, acetic acid, and formic acid.
<9> The thermoplastic resin composition according to any one of <1> to <8> above, wherein the YI value in accordance with JIS K7105 is 0.20 or more lower than that of a reference resin composition having the same composition but without the compounding agent.
<10> The thermoplastic resin composition according to any one of <1> to <9> above, wherein, in General formula (1) above,
   four of R₁-R₅ are hydrogen atoms, and one is a moiety represented by a structural formula of General formula (1-1) above,
   two of R₆-R₉ are hydrogen atoms and two are alkyl groups, and
   R₁₀ is a hydrogen atom.
<11> The thermoplastic resin composition according to any one of <1> to <10> above, wherein, in General formulae (1) and (1-1) above, the substituent is any of a halogen, a cyano group, an alkenyl group, an alkynyl group, and an alkoxy group.
<12> The thermoplastic resin composition according to any one of <1> to <11> above, further comprising a thermoplastic resin, wherein the thermoplastic resin is selected from the group consisting of a polycarbonate resin, a polyester resin, a polyester carbonate resin, a cyclo-olefin-based resin, and an acrylic resin.
<13> The thermoplastic resin composition according to <12> above, wherein the thermoplastic resin is a polycarbonate resin, a polyester resin, or a polyester carbonate resin, which comprises Structural unit (B) derived from a monomer represented by General formula (2) below and/or Structural unit (C) derived from a monomer represented by General formula (3) below: 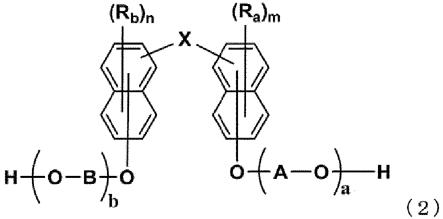
   (in General formula (2),
   Rₐ and R_{b} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, an optionally substituted aryl group with 6-20 carbon atoms, an optionally substituted heteroaryl group with 6-20 carbon atoms containing one or more heteroatoms selected from O, N, and S, an optionally substituted aryloxy group with 6-20 carbon atoms, and -C=C-Rₕ,
   Rₕ represents an optionally substituted aryl group with 6-20 carbon atoms or an optionally substituted heteroaryl group with 6-20 carbon atoms containing one or more heteroatoms selected from O, N, and S,
   X represents a single bond or an optionally substituted fluorene group,
   A and B each independently represent an optionally substituted alkylene group with 1-5 carbon atoms,
   m and n each independently represent an integer from 0 to 6, and
   a and b each independently represent an integer from 0 to 10); 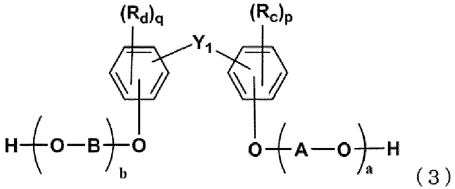
   (in General formula (3),
   Rₑ and R_{d} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms,
   Y₁ is a single bond, an optionally substituted fluorene group, or any of the structural formulae represented by General formulae (4) to (9) below: 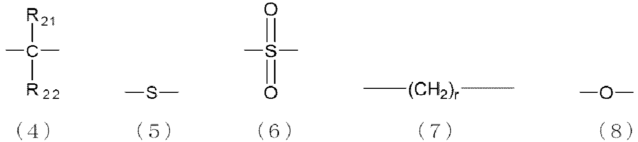 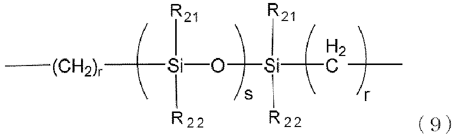
   (in General formulae (4)-(9),
   R₂₁ and R₂₂ each independently represent a hydrogen atom, a halogen atom, an optionally substituted alkyl group with 1-20 carbon atoms, or an optionally substituted aryl group with 6-30 carbon atoms, or R₂₁ and R₂₂ are bonded together to form an optionally substituted carbon or heterocyclic ring having 1-20 carbon atoms, and
   r and s each independently represent an integer from 0 to 5,000,
   A and B each independently represent an optionally substituted alkylene group with 1-5 carbon atoms,
   p and q each independently represent an integer from 0 to 4, and
   a and b each independently represent an integer from 0 to 10).
<14> The thermoplastic resin composition according to either one of <12> and <13> above, wherein the weight-average molecular weight (Mw) of the thermoplastic resin in terms of polystyrene equivalent is 10,000-300,000.
<15> The thermoplastic resin composition according to either one of <13> and <14> above, wherein, in General formulae (2) and (3), A and B each independently represent an alkylene group with 2 or 3 carbon atoms.
<16> The thermoplastic resin composition according to any one of <12> to <15> above, wherein the thermoplastic resin contains at least a structural unit derived from any one of BPEF, BNE, BNEF, and DPBHBNA.
<17> The thermoplastic resin composition according to any one of <1> to <16> above, further comprising a catalyst deactivator.
<18> The thermoplastic resin composition according to <17> above, wherein the catalyst deactivator comprises dodecylbenzene sulfonate.
<19> The thermoplastic resin composition according to any one of <1> to <18> above, further comprising a mold release agent.
<20> The thermoplastic resin composition according to <19> above, wherein the mold release agent is contained in an amount of 1-5,000 ppm by weight based on the total weight of the resin composition.
<21> A thermoplastic resin composition comprising a compounding agent represented by General formula (1) below to improve the value of transmittance (%) at a wavelength of 370 nm-400 nm: 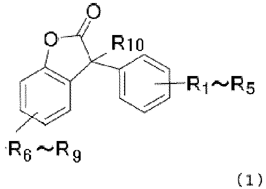
   (in General formula (1),
   R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
   R₆-R₉ each independently represent a hydrogen atom, or an optionally substituted alkyl or alkoxy group having a total of 1-20 carbon atoms, and
   R₁₀ represents a hydrogen atom or an alkyl group having a total of 1-5 carbon atoms); 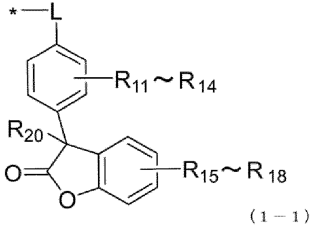
   (in General formula (1-1),
   R₁₁₋R₁₈ each independently represent a hydrogen atom, an optionally substituted alkyl or alkoxy group having a total of 1-20 carbon atoms,
   L is a moiety represented by General formula (L1) or (L2) below: 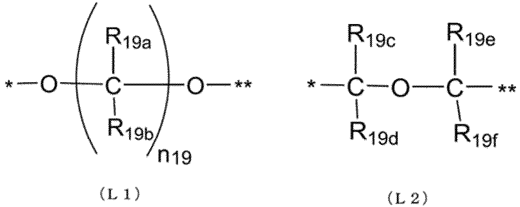
   (in Formula (L1),
   R₁₉ₐ and R_{19b} each independently represent a hydrogen atom, or an alkyl or alkoxy group having a total of 1-20 carbon atoms, and
   n₁₉ represents an integer from 1 to 12, and when n₁₉ is an integer from 2 to 12, the plurality of R₁₉ₐ may be the same or different substituents and the plurality of R_{19b} may be the same or different substituents,
   in Formula (L2),
   R_{19c}, R_{19d}, R₁₉ₑ, and R₁₉f each independently represent a hydrogen atom, or an alkyl or alkoxy group having a total of 1-20 carbon atoms,
   in Formulae (L1) and (L2),
   * each represent the position of bonding with the benzene ring containing R₁-R₅ in Formula (1) above, and
   ** each represent the position of bonding with the benzene ring containing R₁₁-R₁₄ in Formula (1-1) above),
   R₂₀ represents a hydrogen atom or an optionally substituted alkyl group having a total of 1-5 carbon atoms, and
   * represents the position of bonding with the benzene ring containing R₁-R₅ in Formula (1) above.)
<22> A molded article comprising the thermoplastic resin composition according to any one of <1> to <21> above.
<23> A method for producing a thermoplastic resin composition, the method comprising a step of adding a compounding agent represented by General formula (1) below to a thermoplastic resin: 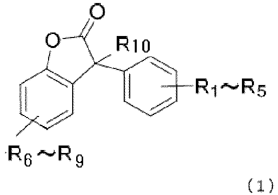
   (in General formula (1),
   R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
   R₆-R₉ each independently represent a hydrogen atom, or an optionally substituted alkyl or alkoxy group having a total of 1-20 carbon atoms, and
   R₁₀ represents a hydrogen atom or an alkyl group having a total of 1-5 carbon atoms); 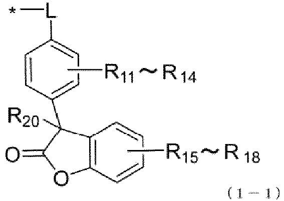
   (in General formula (1-1),
   R₁₁₋R₁₈ each independently represent a hydrogen atom, or an optionally substituted alkyl or alkoxy group having a total of 1-20 carbon atoms,
   L is a moiety represented by General formula (L1) or (L2) below: 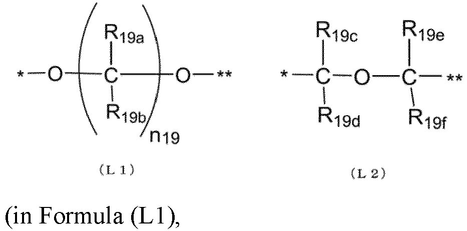
   R₁₉ₐ and R_{19b} each independently represent a hydrogen atom, or an alkyl or alkoxy group having a total of 1-20 carbon atoms, and
   n₁₉ represents an integer from 1 to 12, and when n₁₉ is an integer from 2 to 12, the plurality of R₁₉ₐ may be the same or different substituents and the plurality of R_{19b} may be the same or different substituents,
   in Formula (L2),
   R_{19c}, R_{19d}, R₁₉ₑ, and R₁₉f each independently represent a hydrogen atom, or an alkyl or alkoxy group having a total of 1-20 carbon atoms,
   in Formulae (L1) and (L2),
   * each represent the position of bonding with the benzene ring containing R₁-R₅ in Formula (1) above, and
   ** each represent the position of bonding with the benzene ring containing R₁₁-R₁₄ in Formula (1-1) above),
   R₂₀ represents a hydrogen atom or an optionally substituted alkyl group having a total of 1-5 carbon atoms, and
   * represents the position of bonding with the benzene ring containing R₁-R₅ in Formula (1) above.)
<24> A method for improving transmittance of a thermoplastic resin composition, the method comprising a step of adding a compounding agent represented by General formula (1) below to a thermoplastic resin: 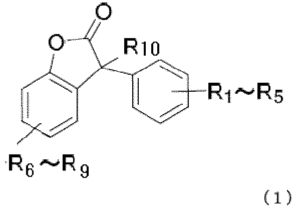
   (in General formula (1),
   R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
   R₆-R₉ each independently represent a hydrogen atom, or an optionally substituted alkyl or alkoxy group having a total of 1-20 carbon atoms, and
   R₁₀ represents a hydrogen atom or an alkyl group having a total of 1-5 carbon atoms); 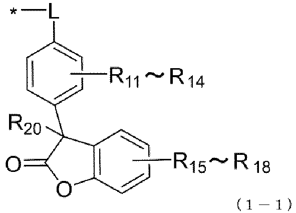
   (in General formula (1-1),
   R₁₁₋R₁₈ each independently represent a hydrogen atom, or an optionally substituted alkyl or alkoxy group having a total of 1-20 carbon atoms,
   L is a moiety represented by General formula (L1) or (L2) below: 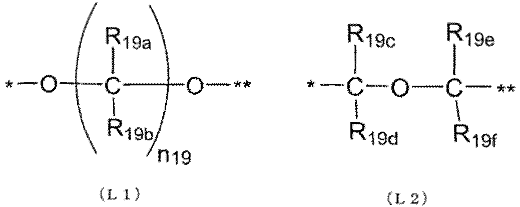
   (in Formula (L1),
   R₁₉ₐ and R_{19b} each independently represent a hydrogen atom, or an alkyl or alkoxy group having a total of 1-20 carbon atoms, and
   n₁₉ represents an integer from 1 to 12, and when n₁₉ is an integer from 2 to 12, the plurality of R₁₉ₐ may be the same or different substituents and the plurality of R_{19b} may be the same or different substituents,
   in Formula (L2),
   R_{19c}, R_{19d}, R₁₉ₑ, and R₁₉f each independently represent a hydrogen atom, or an alkyl or alkoxy group having a total of 1-20 carbon atoms,
   in Formulae (L1) and (L2),
   * each represent the position of bonding with the benzene ring containing R₁-R₅ in Formula (1) above, and
   ** each represent the position of bonding with the benzene ring containing R₁₁-R₁₄ in Formula (1-1) above),
   R₂₀ represents a hydrogen atom or an optionally substituted alkyl group having a total of 1-5 carbon atoms, and
   * represents the position of bonding with the benzene ring containing R₁-R₅ in Formula (1) above.)
<25> A method for improving hue of a thermoplastic resin composition, the method comprising a step of adding a compounding agent represented by General formula (1) below to a thermoplastic resin: 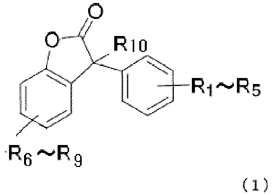
   (in General formula (1),
   R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
   R₆-R₉ each independently represent a hydrogen atom, or an optionally substituted alkyl or alkoxy group having a total of 1-20 carbon atoms, and
   R₁₀ represents a hydrogen atom or an alkyl group having a total of 1-5 carbon atoms); 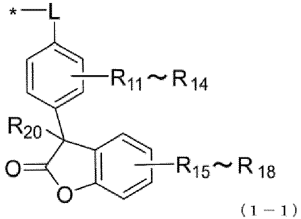
   (in General formula (1-1),
   R₁₁₋R₁₈ each independently represent a hydrogen atom, or an optionally substituted alkyl or alkoxy group having a total of 1-20 carbon atoms,
   L is a moiety represented by General formula (L1) or (L2) below: 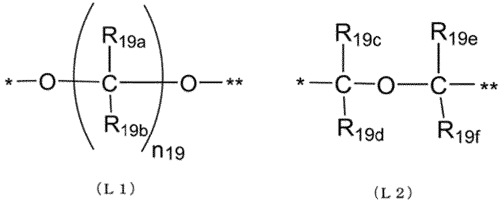
   (in Formula (L1),
   R₁₉ₐ and R_{19b} each independently represent a hydrogen atom, or an alkyl or alkoxy group having a total of 1-20 carbon atoms, and
   n₁₉ represents an integer from 1 to 12, and when n₁₉ is an integer from 2 to 12, the plurality of R₁₉ₐ may be the same or different substituents and the plurality of R_{19b} may be the same or different substituents,
   in Formula (L2),
   R_{19c}, R_{19d}, R₁₉ₑ, and R₁₉f each independently represent a hydrogen atom, or an alkyl or alkoxy group having a total of 1-20 carbon atoms,
   in Formulae (L1) and (L2),
   * each represent the position of bonding with the benzene ring containing R₁-R₅ in Formula (1) above, and
   ** each represent the position of bonding with the benzene ring containing R₁₁-R₁₄ in Formula (1-1) above),
   R₂₀ represents a hydrogen atom or an optionally substituted alkyl group having a total of 1-5 carbon atoms, and
   * represents the position of bonding with the benzene ring containing R₁-R₅ in Formula (1) above.)

### ADVANTAGEOUS EFFECT OF THE INVENTION

As described above, a thermoplastic resin composition of the present invention contains a predetermined compounding agent and can maintain transmittance, especially in the low-wavelength range, at a good level. For example, although addition of an antioxidant and a mold release agent to a conventional thermoplastic resin composition has been found to have a tendency of decreasing the transmittance, the decrease in the transmittance, especially in the low-wavelength range, can be prevented in the thermoplastic resin composition of the present invention even when additives, etc. are added. Such a thermoplastic resin composition is especially suitable as an optical material, etc.

### [1. Components of thermoplastic resin composition]

Hereinafter, components of the thermoplastic resin composition will be described.

### [1-1. Compounding agent]

The thermoplastic resin composition contains a compounding agent represented by General formula (1). The compounding agent represented by General formula (1) is used to improve the transmittance of the thermoplastic resin composition, especially the transmittance value at a low wavelength.

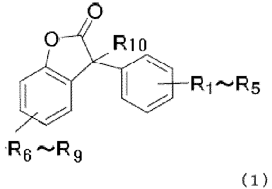

In General formula (1), R₁-R₅ each independently represent a hydrogen atom, an optionally substituted alkyl group having a total of 1-20 carbon atoms, or an alkoxy group having a total of 1-20 carbon atoms. R₁-R₅ are preferably a hydrogen atom, an optionally substituted alkyl group having a total of 1-10 carbon atoms, or an optionally substituted alkoxy group having a total of 1-10 carbon atoms, where the total number of the carbon atoms in each of the optionally substituted alkyl and alkoxy groups is more preferably 1-5 and still more preferably 1-3, and the alkyl group is, for example, a methyl group.

Moreover, with respect to R₁-R₅ in General formula (1), preferably, two to four of them are hydrogen atoms and one to three of them are alkyl groups, more preferably, three of them are hydrogen atoms and two of them are alkyl groups.

In General formula (1), R₆-R₉ each independently represent a hydrogen atom, an optionally substituted alkyl group having a total of 1-20 carbon atoms, or an optionally substituted alkoxy group having a total of 1-20 carbon atoms. R₆-R₉ are preferably a hydrogen atom, an optionally substituted alkyl group having a total of 1-10 carbon atoms, or an optionally substituted alkoxy group having a total of 1-10 carbon atoms, where the total number of the carbon atoms in each of the optionally substituted alkyl and alkoxy groups is more preferably 1-8 and still more preferably 1-5, and the alkyl group is, for example, a t-butyl group.

Moreover, with respect to R₆-R₉ in General formula (1), preferably, one to three of them are hydrogen atoms and one to three of them are alkyl groups, more preferably, two of them are hydrogen atoms and two of them are alkyl groups.

In General formula (1), R₁₀ represents a hydrogen atom or an alkyl group having a total of 1-5 carbon atoms. R₁₀ is preferably a hydrogen atom or an optionally substituted alkyl group having a total of 1-3 carbon atoms, where the total number of the carbon atoms in the optionally substituted alkyl group is more preferably 1 or 2. More preferably, R₁₀ is a hydrogen atom.

While the carbon atom bonded to R₁₀ in General formula (1) is a chiral carbon, the compounding agent represented by General formula (1) may be racemic or optically active.

As described above, at least one of R₁-R₅ in General formula (1) is a structural formula represented by General formula (1-1) below.

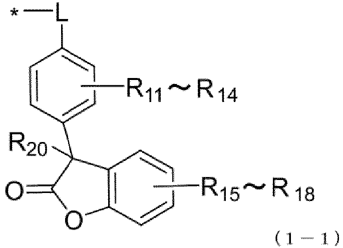

In General formula (1-1), R₁₁₋R₁₄ each independently represent a hydrogen atom, an optionally substituted alkyl group having a total of 1-20 carbon atoms, or an alkoxy group having a total of 1-20 carbon atoms. Among these substituents, R₁₁₋R₁₄ are preferably a hydrogen atom, an optionally substituted alkyl group having a total of 1-10 carbon atoms, or an optionally substituted alkoxy group having a total of 1-10 carbon atoms, where the total number of the carbon atoms in each of the optionally substituted alkyl and alkoxy groups is more preferably 1-5 and still more preferably 1-3. More preferably, R₁₁₋R₁₄ are hydrogen atoms.

Of R₁₁₋R₁₈ in General formula (1-1), R₁₅-R₁₈ are each preferably a hydrogen atom, an optionally substituted alkyl group having a total of 1-10 carbon atoms, or an optionally substituted alkoxy group having a total of 1-10 carbon atoms, where the total number of the carbon atoms in each of the optionally substituted alkyl and alkoxy groups is preferably 1-8 and more preferably 1-5, and the alkyl groups represented by R₁₅-R₁₈ are, for example, t-butyl groups.

Moreover, with respect to R₁₅-R₁₈ in General formula (1), preferably, one to three of them are hydrogen atoms and one to three of them are alkyl groups, more preferably, two of them are hydrogen atoms and two of them are alkyl groups.

In General formula (1-1), L is a moiety represented by General formula (L1) or (L2) below.

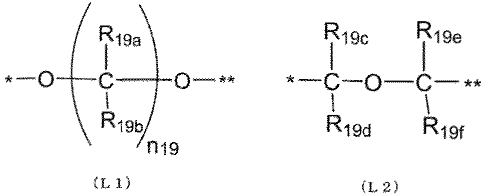

In Formula (L1), R₁₉ₐ and R_{19b} each independently represent a hydrogen atom, an alkyl or alkoxy group having a total of 1-20 carbon atoms. R₁₉ₐ and R_{19b} are preferably a hydrogen atom, an optionally substituted alkyl group having a total of 1-5 carbon atoms, or an optionally substituted alkoxy group having a total of 1-5 carbon atoms. The total number of the carbon atoms in each of the optionally substituted alkyl and alkoxy groups is more preferably 1-3 and still more preferably 1 or 2. More preferably, R₁₉ₐ and R_{19b} are hydrogen atoms.

n₁₉ represents an integer from 1 to 12, and when n₁₉ is an integer from 2 to 12, the plurality of R₁₉ₐ may be the same or different substituents and the plurality of R_{19b} may also be the same or different substituents, n₁₉ is preferably 1-6, more preferably 1-4, and, for example, 2 or 3.

In Formula (L2), R_{19c}, R_{19d}, R₁₉ₑ, and R₁₉f each independently represent a hydrogen atom, or an alkyl or alkoxy group having a total of 1-20 carbon atoms. R_{19c}, R_{19d}, R₁₉ₑ, and R_{19f} are preferably each independently a hydrogen atom, an optionally substituted alkyl group having a total of 1-5 carbon atoms, or an optionally substituted alkoxy group having a total of 1-5 carbon atoms. The total number of the carbon atoms in each of the optionally substituted alkyl and alkoxy groups is more preferably 1-3 and still more preferably 1 or 2. More preferably, R_{19c}, R_{19d}, R₁₉ₑ, and R_{19f} are hydrogen atoms.

In Formulae (L1) and (L2), * each independently represent the bonding position of L with the benzene ring containing R₁-R₅ in Formula (1). Accordingly, * in Formulae (L1) and (L2) each represent the same bonding position as that represented by * in Formula (1-1) and represent the bonding position at the terminal of Formula (1-1).

In Formulae (L1) and (L2), ** each independently represent the bonding position of L with the benzene ring containing R₁₁₋R₁₄ in Formula (1-1).

In General formula (1-1), R₂₀ represents a hydrogen atom or an alkyl group having a total of 1-5 carbon atoms. R₂₀ is preferably a hydrogen atom or an optionally substituted alkyl group having a total of 1-3 carbon atoms, where the total number of the carbon atoms in the optionally substituted alkyl group is more preferably 1 or 2. More preferably, R₂₀ is a hydrogen atom.

While the carbon atom bonded to R₂₀ in General formula (1) is a chiral carbon, the compounding agent containing the moiety represented by General formula (1-1) may be racemic or optically active.

Preferably, one or two of R₁-R₅ in General formula (1) are represented by structural formulae of General formula (1-1) above, and more preferably, only one of R₁-R₅ is represented by a structural formula of General formula (1-1) above.

The above substituents in General formulae (1) and (1-1) are, for example, any of a halogen, a cyano group, an alkenyl group, an alkynyl group, and an alkoxy group.

Specific examples of the compounding agent represented by General formula (1) include a compound represented by Formula (12) below, and any of optically active forms and mixtures thereof (e.g. racemates, etc.)

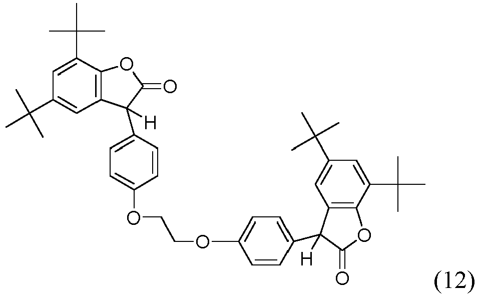

In the thermoplastic resin composition, the compounding agent is preferably contained in an amount of 1-2,000 ppm by weight based on the total weight of the thermoplastic resin composition. The content of the compounding agent in the thermoplastic resin composition is more preferably 10-1,000 ppm by weight, still more preferably 50-800 ppm by weight, particularly preferably 50-500 ppm by weight, and even more preferably 100-300 ppm by weight.

In addition to the above-described compounding agent, the thermoplastic resin composition may further contain the following additives.

### [1-2. Antioxidant]

The thermoplastic resin composition preferably contains an antioxidant.

The antioxidant is preferably at least either one of phenolic antioxidant and phosphite-based antioxidant.

Examples of the phenolic antioxidant include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6 (1H,3H,5H)-trione, 4,4',4"-(1-methylpropanyl-3-ylidene)tris(6-tert-butyl-m-cresol), 6,6'-di-tert-butyl-4,4'-butylidene di-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate], where pentaerythritol-tetrakis[3-(3,5-di-tert-butyl-4-hydroxyphenyl)propionate] is preferable.

Examples of the phosphite-based antioxidant include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9 diphosphaspiro[5.5]undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl) 2-ethylhexyl phosphite, tris(2,4-di-tert-butylphenyl)phosphite, tris(nonylphenyl)phosphite, tetra-C12-15-alkyl(propane-2,2-diylbis(4,1-phenylene))bis(phosphite), and 3,9-bis(2,6-di-tert-butyl-4-methylphenoxy)-2,4,8,10-tetraoxa-3,9-diphosphaspiro[5.5]undecane, where 3,9-bis(2,6-di-tert-butyl-4-methylphenoxy)-2,4,8,10-tetraoxa-3,9-diphosphaspiro[5.5]undecane is preferable.

Only one of the above-mentioned antioxidants or a mixture of two or more of them may be used as the antioxidant.

The antioxidant is preferably contained in thermoplastic resin composition in an amount of 1-3,000 ppm by weight based on the total weight of the resin composition. The content of the antioxidant in the thermoplastic resin composition is more preferably 50-2,500 ppm by weight, still more preferably 100-2,000 ppm by weight, particularly preferably 150-1,500 ppm by weight, and even more preferably 200 ppm-1,200 ppm by weight.

### [1-3. Mold release agent]

The thermoplastic resin composition preferably contains a mold release agent.

Examples of the mold release agent include an ester compound, for example, a glycerol fatty acid ester such as a mono- or di-glyceride of a glycerol fatty acid, a glycol fatty acid ester such as propylene glycol fatty acid ester and sorbitan fatty acid ester, a higher alcohol fatty acid ester, and a full ester or mono-fatty acid ester of an aliphatic polyhydric alcohol and an aliphatic carboxylic acid. When an ester of an aliphatic polyhydric alcohol and an aliphatic carboxylic acid is used as the mold release agent, it may be any of a monoester, a full ester, or the like, for example, a monoester, which is not a full ester.

Specific examples of the mold release agent include the following:
sorbitan fatty acid esters such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters such as propylene glycol monostearate, propylene glycol monooleate, propylene glycol monobehenate, propylene glycol monolaurate, and propylene glycol monopalmitate;
higher alcohol fatty acid esters such as stearyl stearate;
glycerol fatty acid ester monoglycerides, including: monoglycerides such as glycerol monostearate, glycerol monohydroxystearate (e.g., glycerol mono-12-hydroxystearate), glycerol monooleate, glycerol monobehenate, glycerol monocaprylate, glycerol monocaprate, and glycerol monolaurate; and mono/di-glycerides such as glycerol mono/di-stearate, glycerol mono/di-stearate, glycerol mono/di-behenate, and glycerol mono/di-olate;
acetylated monoglycerides of glycerol fatty acid esters such as glycerol diacetomonolaurate;
organic acid monoglycerides of glycerol fatty acid esters such as a monoglyceride of citric acid fatty acid, a monoglyceride of succinic acid fatty acid, and a monoglyceride of diacetyl tartaric fatty acid; and
polyglycerol fatty acid esters such as diglycerol stearate, diglycerol laurate, diglycerol oleate, diglycerol monostearate, diglycerol monolaurate, diglycerol monomyristate, diglycerol monooleate, tetraglycerol stearate, decaglycerol laurate, decaglycerol oleate, and polyglycerol polyricinoleate.

In the thermoplastic resin composition, the mold release agent is preferably contained in an amount of 1-5,000 ppm by weight based on the total weight of the resin composition. The content of the mold release agent in the thermoplastic resin composition is more preferably 50-4,000 ppm by weight, still more preferably 100-3,500 ppm by weight, particularly preferably 500-13,000 ppm by weight, and even more preferably 1,000-2,500 ppm by weight.

### [1-4. Catalyst deactivator]

The thermoplastic resin composition preferably further contains a catalyst deactivator as an additive. The catalyst deactivator terminates the polymerization reaction by causing the loss of the activity of the catalyst used for the polymerization of the curable resin composition.

As the catalyst deactivator, an ester such as butyl benzoate; an aromatic sulfonic acid such as p-toluenesulfonic acid; an aromatic sulfonic ester such as butyl p-toluenesulfonate or hexyl p-toluenesulfonate; a phosphoric acid such as phosphorous acid, phosphoric acid, or phosphonic acid; a phosphite ester such as triphenyl phosphite, monophenyl phosphite, diphenyl phosphite, diethyl phosphite, di-n-propyl phosphite, di-n-butyl phosphite, di-n-hexyl phosphite, dioctyl phosphite, or monooctyl phosphite; a phosphate such as triphenyl phosphate, diphenyl phosphate, monophenyl phosphate, dibutyl phosphate, dioctyl phosphate, or monooctyl phosphate; a phosphonic acid such as diphenyl phosphonic acid, dioctyl phosphonic acid, or dibutyl phosphonic acid; a phosphonic ester such as diethyl phenyl phosphonic acid; a phosphine such as triphenyl phosphine or bis(diphenyl phosphino)ethane; a boric acid such as boric acid or phenylboric acid; an aromatic sulfonate such as tetrabutylphosphonium salt with dodecylbenzenesulfonic acid; an organic halide such as stearic acid chloride, benzoyl chloride, or p-toluenesulfonate chloride; an alkyl sulfate such as dimethyl sulfate; or an organic halide such as benzyl chloride can suitably be used. From the viewpoints of the effect of the deactivator, the stability of the resin, and the like, tetrabutylphosphonium salt with dodecylbenzenesulfonic acid, p-toluene, or butyl sulfonate is particularly preferred. These deactivators are used at 0.01-50 times, preferably 0.3-20 times, the molar amount of the catalyst. If the amount is less than 0.01 times the molar amount of the catalyst, the deactivation effect will be inadequate, which is unfavorable. On the other hand, if the amount is greater than 50 times the molar amount of the catalyst, the heat resistance of the resin will be deteriorated and the molded article will easily be colored, which are undesirable.

In the thermoplastic resin composition, the catalyst deactivator is preferably contained in an amount of 1-1,000 ppm by weight based on the total weight of the resin composition. The content of the catalyst deactivator in the thermoplastic resin composition is more preferably 3-500 ppm by weight, still more preferably 5-100 ppm by weight, and particularly preferably 10-50 ppm by weight.

The catalyst deactivator may be added to the thermoplastic resin composition, preferably as a solution, for example, as an aqueous solution. The catalyst deactivator may be added to the thermoplastic resin composition as an alcohol solution of, for example, methanol or ethanol, or as a solution in an organic solvent such as a phenol solution.

### [1-5. Other additives]

In addition to the above-described compounding agent, antioxidant, mold release agent, and catalyst deactivator, other additives may be added to the thermoplastic resin composition. Examples of the additives that may be contained in the thermoplastic resin composition include a heat stabilizer, a plasticizer, a filler, a UV absorber, an anti-rust agent, a dispersant, a defoaming agent, a leveling agent, a flame retardant, a lubricant, a dye, a pigment, a bluing agent, a nucleating agent, and a clarifying agent.

The content of additives other than the compounding agent, antioxidant, mold release agent, and catalyst deactivator (hereinafter also referred to as "additional additives") in the thermoplastic resin composition is, but not limited to, preferably 10 ppm to 5.0% by weight, more preferably 100 ppm to 2.0% by weight, and still more preferably 1,000 ppm to 1.0% by weight.

Since the additives mentioned above may adversely affect transmittance, they are preferably not added in excess and the total amount of them added is, for example, within the range mentioned above.

### [1-6. Thermoplastic resin]

The thermoplastic resin composition contains a thermoplastic resin.

The thermoplastic resin is preferably any one or more of a polycarbonate resin, a polyester resin, a polyester carbonate resin, a cyclo-olefin-based resin, and an acrylic resin.

The thermoplastic resin preferably contains a polycarbonate resin, a polyester resin, or a polyester carbonate resin, which has Structural unit (B) derived from a monomer represented by General formula (2) below.

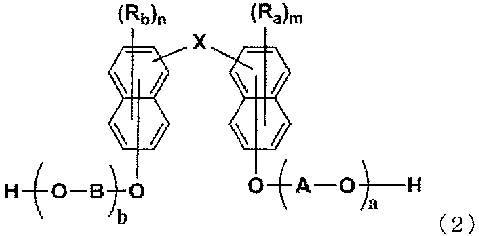

In General formula (2), Rₐ and R_{b} are each independently selected from the group consisting of a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, an optionally substituted aryl group with 6-20 carbon atoms, an optionally substituted heteroaryl group with 6-20 carbon atoms containing one or more heteroatoms selected from O, N, and S, an optionally substituted aryloxy group with 6-20 carbon atoms, and -C=C-Rₕ. Rₕ represents an optionally substituted aryl group with 6-20 carbon atoms or an optionally substituted heteroaryl group with 6-20 carbon atoms containing one or more heteroatoms selected from O, N, and S.

Rₐ and R_{b} are preferably hydrogen atoms, optionally substituted aryl groups with 6-20 carbon atoms, or optionally substituted heteroaryl groups with 6-20 carbon atoms containing one or more heteroatoms selected from O, N, and S. They are more preferably hydrogen atoms or optionally substituted aryl groups with 6-20 carbon atoms, and still more preferably hydrogen atoms or optionally substituted aryl groups with 6-12 carbon atoms.

In General formula (2), X represents a single bond or an optionally substituted fluorene group. X is preferably a single bond, or an optionally substituted fluorene group with a total of 12-20 carbon atoms.

In General formula (2), A and B are each independently an optionally substituted alkylene group with 1-5 carbon atoms, and preferably an alkylene group with 2 or 3 carbon atoms.

In General formula (2), m and n are each independently an integer from 0 to 6, preferably an integer from 0 to 3, and more preferably 0 or 1.

In General formula (2), a and b are each independently an integer from 0 to 10, preferably an integer from 1 to 3, and more preferably 1 or 2.

Examples of Structural unit (B) include those derived from BNE, DPBHBNA, or the like.

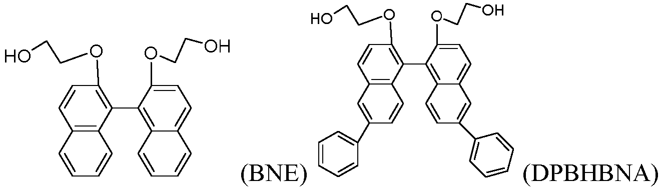

The thermoplastic resin preferably contains a polycarbonate resin, a polyester resin, or a polyester carbonate resin, which has Structural unit (C) derived from a monomer represented by General formula (3) below.

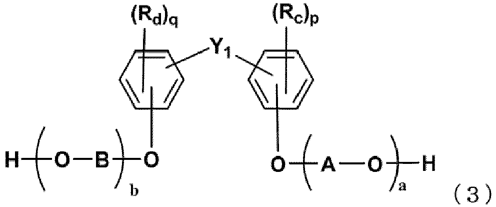

In General formula (3), Rₑ and R_{d} are each independently selected from the group consisting of a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms.

Rₑ and R_{d} are preferably hydrogen atoms, optionally substituted aryl groups with 6-20 carbon atoms, or optionally substituted heteroaryl groups with 6-20 carbon atoms containing one or more heteroatoms selected from O, N, and S. They are more preferably hydrogen atoms or optionally substituted aryl groups with 6-20 carbon atoms, and still more preferably hydrogen atoms or optionally substituted aryl groups with 6-12 carbon atoms.

In General formula (3), Y₁ is a single bond, an optionally substituted fluorene group, or any of the structural formulae represented by General formulae (4) to (9) below. Preferably, it is a single bond or a structural formula represented by General formula (4) below.

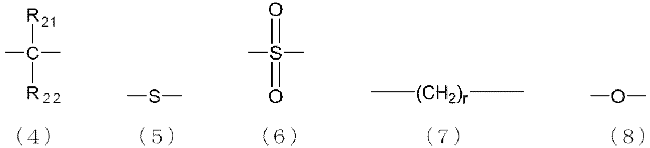

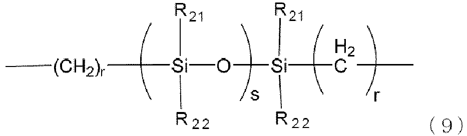

In General formulae (4) and (9), R₂₁ and R₂₂ each independently represent a hydrogen atom, a halogen atom, an optionally substituted alkyl group with 1-20 carbon atoms, or an optionally substituted aryl group with 6-30 carbon atoms, or R₂₁ and R₂₂ are bonded together to form an optionally substituted carbon or heterocyclic ring having 1-20 carbon atoms.

In General formulae (7) and (9), r and s each independently represent an integer from 0 to 5,000.

In General formula (3), A and B are each independently an optionally substituted alkylene group with 1-5 carbon atoms, and preferably an alkylene group with 2 or 3 carbon atoms. In General formula (3), p and q are each independently an integer from 0 to 4, and preferably 0 or 1. In addition, in General formula (3) above, a and b are each independently an integer from 0 to 10, preferably an integer from 0 to 5, more preferably an integer from 0 to 2, and still more preferably, for example, 0 or 1.

Specific examples of Structural unit (C) include those derived from BPEF (9,9-bis(4-(2-hydroxyethoxy)phenyl)fluorene), BPPEF (9,9-bis(4-(2-hydroxyethoxy)-3-phenylphenyl)fluorene), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol)), bisphenol P-MIBK (4,4'-(1,3-dimethylbutylidene)bisphenol), bisphenol PEO-FL (bisphenoxyethanol fluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bis-ethanol), S-BOC (4,4'-(1-methylethylidene)bis(2-methylphenol), and TrisP-HAP (4,4',4"-ethylidene trisphenol).

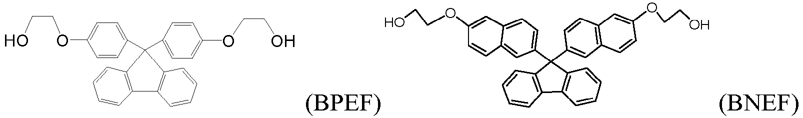

The thermoplastic resin may be a polymer that contains Structural unit (B) but not Structural unit (C), a polymer that contains Structural unit (C) but not Structural unit (B), a copolymer having Structural units (B) and (C), a mixture of a polymer having only Structural unit (B) and a polymer having only Structural unit (C), or a combination thereof. Examples of the polymer that contains Structural unit (C) but not Structural unit (B) include those having at least any of the structural units represented by Formulae (I-1) to (I-3) below, and examples of the copolymer having Structural units (B) and (C) include those having at least any of the structural units represented by Formulae (II-1) to (II-4) below. 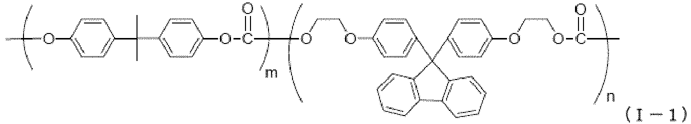 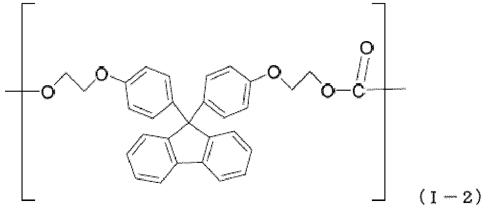 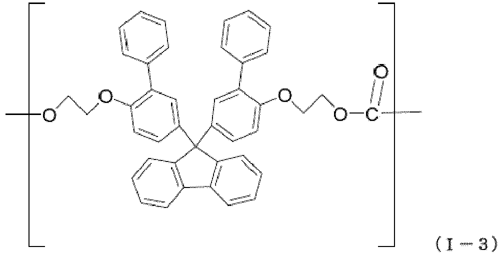
(In Formula (I-1), m and n are each an integer from 1 to 10, preferably an integer from 1 to 5, and more preferably 1, and
in formula (I-3), n is an integer from 1 to 10, preferably an integer from 1 to 5, and more preferably 1.)

Although either a block copolymer in which the values of m and n are high (e.g., 100 or higher) or a random copolymer can be used as the polymer having multiple types of structural units, it is preferable to use a random copolymer, and it is more preferable to use a random copolymer in which the values of m and n are 1. 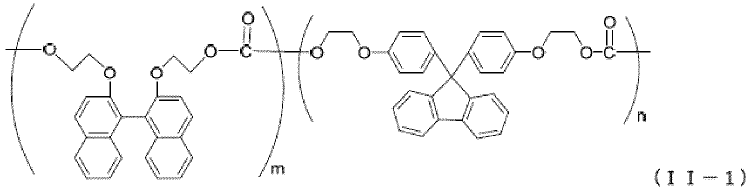 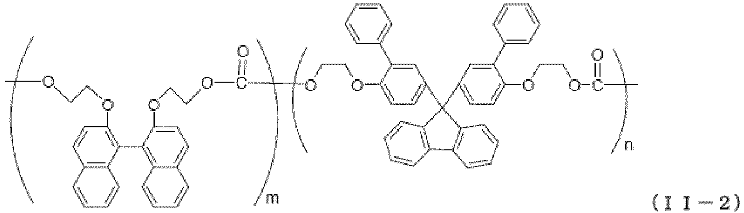 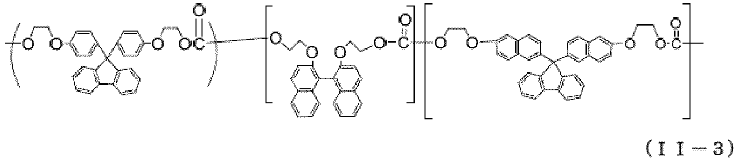 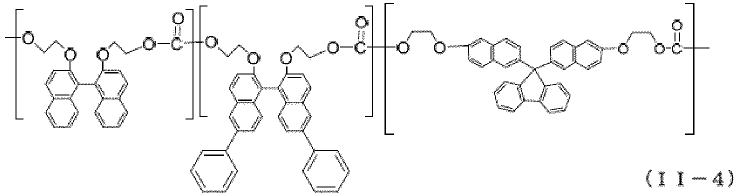 (In Formulae (II-1) to (II-4), m and n are each independently an integer from 1 to 10, preferably an integer from 1 to 5, and more preferably 1.)

Although either a block copolymer in which the values of m and n are high (e.g., 100 or higher) or a random copolymer can be used as the polymer having multiple types of structural units, it is preferable to use a random copolymer, and it is more preferable to use a random copolymer in which the values of m and n are 1. In the above copolymer, the mole ratio of Structural unit (B) to Structural unit (C) is preferably 1:99-99:1, more preferably 10:90-90:10, still more preferably 15:85-85:15, and particularly preferably 30:70-70:30. In the above mixture, the weight ratio of the polymer having only Structural unit (B) to the polymer having only Structural unit (C) is preferably 1:99-99:1, more preferably 10:90-90:10, still more preferably 15:85-85:15, and particularly preferably 30:70-70:30.

The thermoplastic resin may be a cyclo-olefin-based resin or may contain a cyclo-olefin-based resin. Examples of the cyclo-olefin-based resin include those having the following structural units.

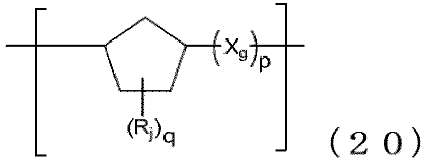

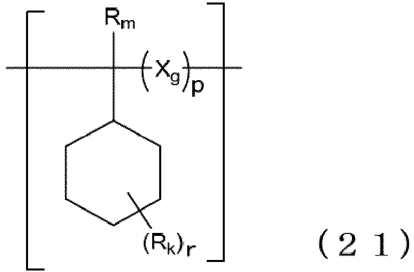

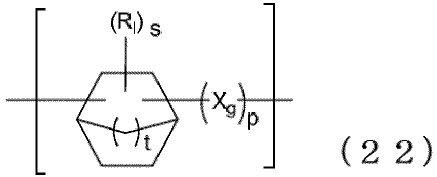

In the above formulae, X_{g} each independently represent an alkylene group with 1-10 carbon atoms. Examples of the alkylene group with 1-10 carbon atoms include methylene, ethylene, propylene, isopropylene, butylene, isobutylene, sec-butylene, tert-butylene, and pentylene. Among them, methylene, ethylene, propylene, butylene, isobutylene, and sec-butylene are preferable, and methylene, ethylene, and propylene are more preferable.

Rⱼ, Rₖ, Rₗ, and Rₘ are each independently selected from a halogen atom, a substituted or unsubstituted alkyl group with 1-20 carbon atoms, a substituted or unsubstituted alkoxyl group with 1-20 carbon atoms, an optionally substituted cycloalkyl group with 5-20 carbon atoms, a substituted or unsubstituted cycloalkoxyl group with 5-20 carbon atoms, a substituted or unsubstituted aryl group with 6-20 carbon atoms, a substituted or unsubstituted heteroaryl group with 3-20 carbon atoms containing one or more heteroatoms selected from O, N, and S, a substituted or unsubstituted aryloxy group with 6-20 carbon atoms, and -C=C-Ri. Examples of Rⱼ, Rₖ, Rₗ, and Rₘ above are the same as those of Xₐ, X_{b}, X_{c}, X_{d}, Xₑ, and X_{f} listed above.

Note that Rⱼ, Rₖ, Rₗ, and Rₘ may have substituents. Examples of these substituents include, but are not limited to, a halogen atom, an alkyl group with 1-10 carbon atoms, a cycloalkyl group with 5-10 carbon atoms, an alkoxy group with 1-10 carbon atoms, a cycloalkyloxy group with 5-10 carbon atoms, an alkyloxycarbonyl group with 2-10 carbon atoms, a cycloalkyloxycarbonyl group with 5-10 carbon atoms, an aryloxycarbonyl group with 7-15 carbon atoms, an alkylcarbonyloxy group with 2-10 atoms, a cycloalkylcarbonyloxy group with 5-10 carbon atoms, an arylcarbonyloxy group with 7-15 carbon atoms, a hydroxyalkylcarbonyl group with 2-10 carbon atoms, a glycidyloxycarbonyl group, a hydroxy group, a carboxy group, a cyano group, and an amide group with 1-10 carbon atoms.

Examples of the alkyl group with 1-10 carbon atoms include a methyl group, an ethyl group, a propyl group, an isopropyl group, a butyl group, an isobutyl group, a sec-butyl group, a tert-butyl group, and a pentyl group.

Examples of the cycloalkyl group with 5-10 carbon atoms include a cyclopentyl group, a cyclohexyl group, a cycloheptyl group, a bicyclo[2.2.1]heptyl group, and a bicyclo[2.2.2]octyl group.

Examples of the alkoxy group with 1-10 carbon atoms include a methoxy group, an ethoxy group, a propyloxy group, an isopropyloxy group, a butoxy group, an isobutoxy group, a sec-butoxy group, a tert-butoxy group, and a pentyloxy group.

Examples of the cycloalkyloxy group with 5-10 carbon atoms include a cyclopentyloxy group, a cyclohexyloxy group, a bicyclo[2.2.1]heptyloxy group, and a bicyclo[2.2.2]octyloxy group.

Examples of the alkyloxycarbonyl group with 2-10 carbon atoms include a methyloxycarbonyl group, an ethyloxycarbonyl group, a propyloxycarbonyl group, an isopropyloxycarbonyl group, a butyloxycarbonyl group, an isobutyloxycarbonyl group, a sec-butyloxycarbonyl group, and a tert-butyloxycarbonyl group.

Examples of the cycloalkyloxycarbonyl group with 5-10 carbon atoms include a cyclopentyloxycarbonyl group, a cyclohexyloxycarbonyl group, a bicyclo[2.2.1]heptyloxycarbonyl group, and a bicyclo[2.2.2]octyloxycarbonyl group.

Examples of the aryloxycarbonyl group with 7-15 carbon atoms include a phenyloxycarbonyl group, a triloxycarbonyl group, a xylyloxycarbonyl group, a trimethylphenyloxycarbonyl group, a tetramethylphenyloxycarbonyl group, an ethylphenyloxycarbonyl group, an ethylmethylphenyloxycarbonyl group, a diethylphenyloxycarbonyl group, and a naphthyloxycarbonyl group.

Examples of the alkylcarbonyloxy group with 2-10 carbon atoms include a methylcarbonyloxy group, an ethylcarbonyloxy group, a propylcarbonyloxy group, an isopropylcarbonyloxy group, and a butylcarbonyloxy group.

Examples of the cycloalkylcarbonyloxy group with 5-10 carbons include a cyclopentylcarbonyloxy group, a cyclohexylcarbonyloxy group, a bicyclo[2.2.1]heptylcarbonyloxy group, and a bicyclo[2.2.2]octylcarbonyloxy group.

Examples of the aryl carbonyloxy group with 7-15 carbon atoms include a phenylcarbonyloxy group, a tolylcarbonyloxy group, a xylylcarbonyloxy group, a trimethylphenylcarbonyloxy group, a tetramethylphenylcarbonyloxy group, an ethylphenylcarbonyloxy group, an ethylmethylphenylcarbonyloxy group, a diethylphenylcarbonyloxy group, and a naphthylcarbonyloxy group.

Examples of the hydroxyalkyl carbonyl group with 2-10 carbon atoms include a hydroxymethylcarbonyl group, a hydroxyethylcarbonyl group, and a hydroxypropylcarbonyl group.

Examples of the amide group with 1-10 carbon atoms include a methylaminocarbonyl group, an ethylaminocarbonyl group, a dimethylaminocarbonyl group, and an acetylamino group.

The above substituents may be contained alone or in combination of two or more.

Rᵢ represents an aryl group with 6-20 carbon atoms or a heteroaryl group with 3-20 carbon atoms containing one or more heteroatoms selected from O, N, and S. This Rᵢ is the same as described above.

p each independently represent an integer of 0 or 1.

q, r, and s are each independently an integer from 0 to 10, preferably an integer from 0 to 5, and more preferably an integer from 0 to 3.

t represents an integer from 1 to 3, and is preferably 1 or 2.

When q is 2 or higher and two Rⱼ exist on adjacent carbon atoms, the two Rⱼ may form a ring structure together. For example, if q is 2 and the two Rⱼ are both substituted or unsubstituted alkyl groups, then General formula (20) may be Formula (20-1) below, and if q is 2 and the two Rⱼ are a substituted or unsubstituted alkyl group and a substituted or unsubstituted cycloalkyl group, respectively, then General formula (20) may be Formula (20-2), (20-3), or (20-4) below.

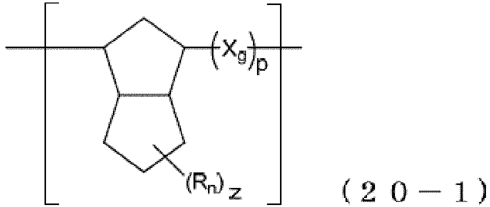

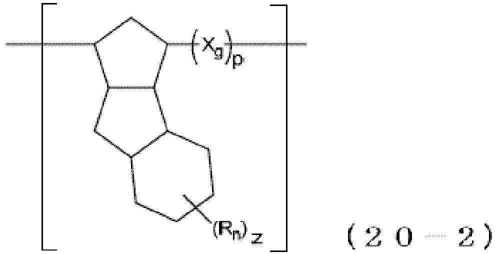

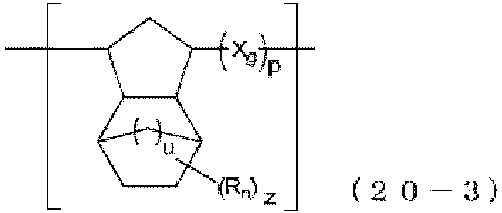

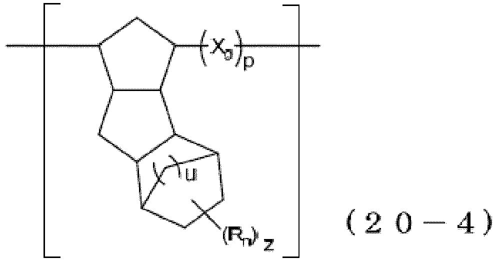

In the above formulae, X_{g} and p are as described above.

Rₙ represents the substituent mentioned above, where specific examples thereof include a halogen atom, an alkyl group with 1-10 carbon atoms, a cycloalkyl group with 5-10 carbon atoms, an alkoxy group with 1-10 carbon atoms, a cycloalkyloxy group with 5-10 carbon atoms, an alkyloxycarbonyl group with 2-10 carbon atoms, a cycloalkyloxycarbonyl group with 5-10 carbon atoms, an aryloxycarbonyl group with 7-15 carbon atoms, an alkylcarbonyloxy group with 2-10 carbon atoms, a cycloalkylcarbonyloxy group with 5-10 carbon atoms, an arylcarbonyloxy group with 7-15 carbon atoms, a hydroxyalkylcarbonyl group with 2-10 carbon atoms, a glycidyloxycarbonyl group, a hydroxy group, a carboxy group, a cyano group, and an amide group with 1-10 carbon atoms.

While z is not particularly limited, it is preferably 0-6, more preferably 0-3, and still more preferably 0 or 1.

u represents an integer from 1 to 3, preferably 1 or 2.

In addition, when r is 2 or higher and two Rₖ exist on adjacent carbon atoms, the two Rₖ may form a ring structure together. For example, if r is 2 and the two Rₖ are both substituted or unsubstituted alkyl groups, then General formula (21) may be Formula (21-1) or (21-2) below, and if r is 2 and the two Rₖ are a substituted or unsubstituted alkyl group and a substituted or unsubstituted cycloalkyl group, respectively, then General formula (21) may be Formula (21-3) below.

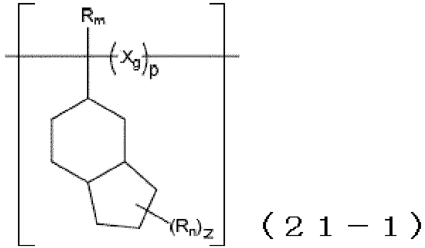

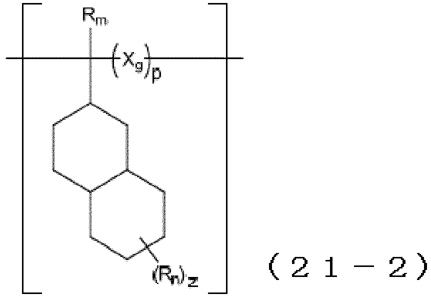

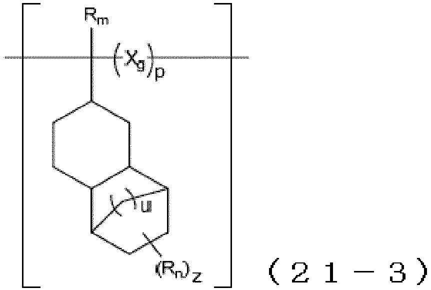

In the above formulae, X_{g}, p, Rₙ, z, and u are as described above.

Furthermore, when s is 2 or higher and two R₁ exist on adjacent carbon atoms, the two R₁ may form a ring structure together. For example, if s is 2 and the two R₁ are both substituted or unsubstituted alkyl groups, then General formula (22) may be Formula (22-1) or (22-2) below, and if s is 2 and the two R₁ are a substituted or unsubstituted alkyl group and a substituted or unsubstituted cycloalkyl group, respectively, then General formula (22) may be Formula (22-3) or (22-4) below.

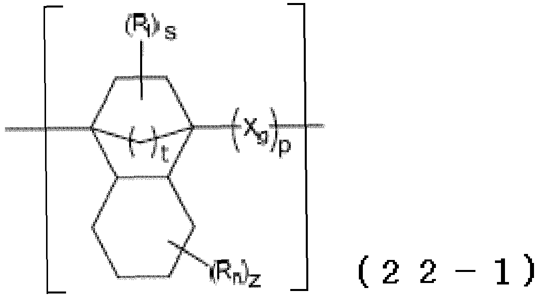

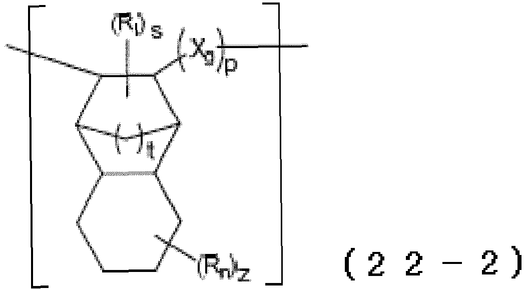

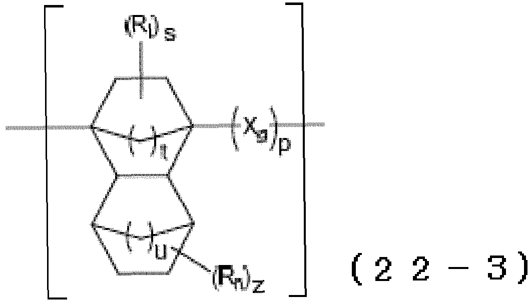

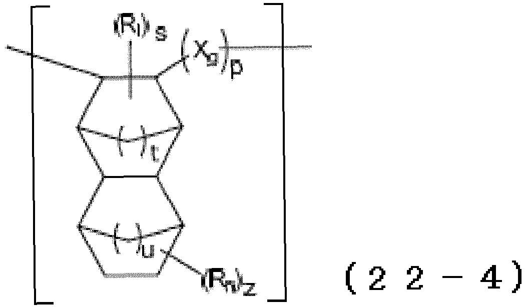

In the above formulae, X_{g}, p, Rₙ, z, and u are as described above.

In Formulae (21-1) to (21-3), Rₘ represents a hydrogen atom or an alkyl group with 1-3 carbon atoms. Examples of the alkyl group with 1-3 carbon atoms include, but are not limited to, a methyl group, an ethyl group, a propyl group, and an isopropyl group.

Specific examples of the cyclo-olefin-based resin include those containing at least one selected from the group consisting of the structural units represented by Formulae 1-8 below.

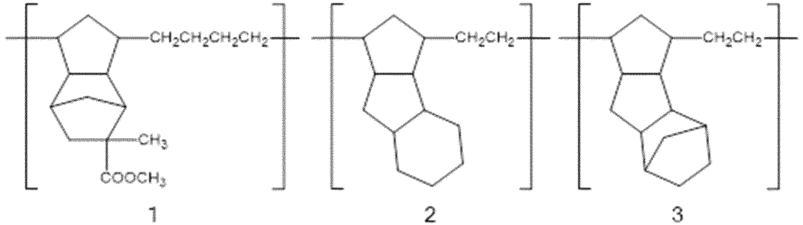

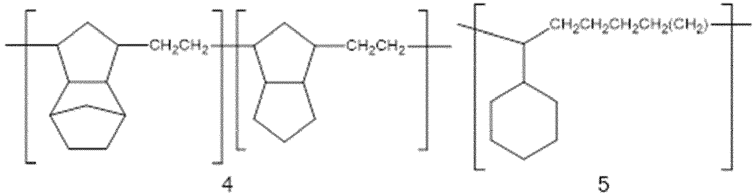

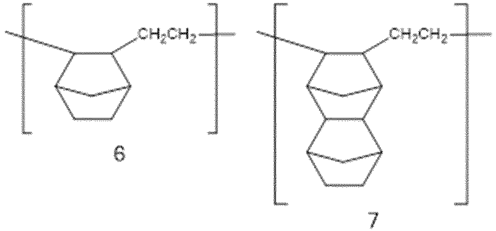

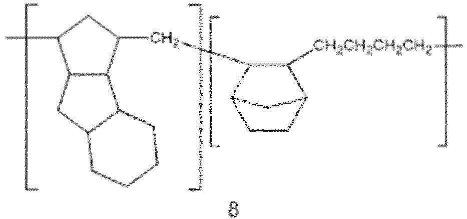

The above-mentioned structural units may be contained in the cyclo-olefin-based resin alone or in a combination of two or more. In addition, the above-mentioned structural units may be combined with a structural unit of other cyclic polyolefin, or with a structural unit of other resin (polyolefin resin, polyester resin) or the like.

While the weight (mass)-average molecular weight (Mw) of the cyclo-olefin-based resin is not particularly limited, it is preferably 1,000-3,000,000, more preferably 10,000-3,000,000, still more preferably 20,000-1,000,000, and particularly preferably 30,000-500,000.

Other than the above-mentioned cyclo-olefin-based resin, a resin (polymer) having a structural unit containing an aliphatic ring may also be used as the thermoplastic resin. For example, a thermoplastic resin that has at least any of the following structural units may be used: specifically, a structural unit represented by Formula (23) below; and a monomer derived structural unit, such as, an isosorbide-derived structural unit, a pentacyclopentadecanedimethanol (PCPMD)-derived structural unit, a cyclohexanedimethanol-derived structural unit, and a spiroglycol-derived structural unit. 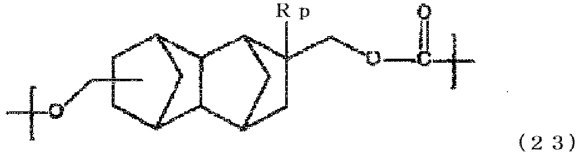 (In General formula (23), Rₚ represents a hydrogen atom or an alkyl group with 1-4 carbon atoms.)

In addition, a copolymer or a blend of either of the above-described cyclo-olefin-based resin or a resin having a structural unit containing an aliphatic ring and a structural unit represented by General formula (24) below may be used as the thermoplastic resin. Specific examples of such thermoplastic resin include copolymers or blends having the structural unit represented by General formula (23) above and the structural unit represented by General formula (24) below. 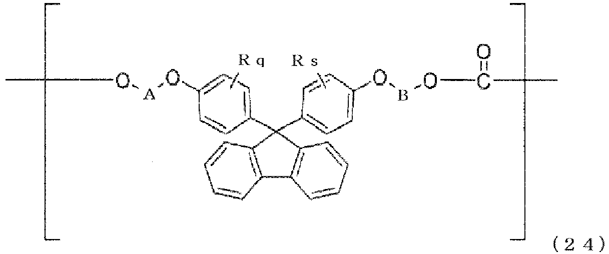 (In General formula (24), R_{q} and Rₛ each independently represent a hydrogen atom, an alkyl group with 1-20 carbon atoms, an alkoxyl group with 1-20 carbon atoms, a cycloalkyl group with 5-20 carbon atoms, a cycloalkoxyl group with 5-20 carbon atoms, an aryl group with 6-20 carbon atoms, or an aryloxy group with 6-20 carbon atoms, and A and B each independently represent an alkylene group with 1-4 carbon atoms.)

The thermoplastic resin may contain an acrylic resin. Examples of the acrylic resin include, but are not particularly limited to, a homopolymer of a (meth)acrylic ester, such as polymethyl methacrylate (PMMA) and methyl methacrylate (MMA), a copolymer of PMMA or MMA with one or more other monomers, and also a mixture of several types of these resins.

Specific examples of a preferable acrylic resin used as the thermoplastic resin include those containing a (meth)acrylic ester structural unit (a) represented by General formula (10) below (hereinafter also referred to as a "structural unit (a)") and an aliphatic vinyl structural unit (b) represented by General formula (11) below (hereinafter also referred to as a "structural unit (b)".)

Herein, a "(meth)acrylic acid" comprises both methacrylic acid and acrylic acid.

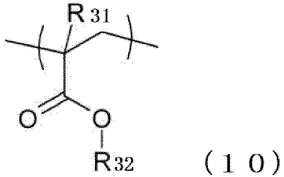

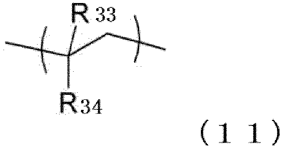

Structural unit (a) is a structural unit derived from a (meth)acrylic acid ester.

In General formula (10) above, R₃₁ is hydrogen or a methyl group.

R₃₂ is a hydrocarbon group having 1-18 carbon atoms, and may have a substituent selected from a hydroxyl group and an alkoxy group. Specific examples of R₃₂ include alkyl groups such as a methyl group, an ethyl group, a butyl group, a lauryl group, a stearyl group, a cyclohexyl group, and an isobornyl group; hydroxyalkyl groups such as a 2-hydroxyethyl group, a 2-hydroxypropyl group, and a 2-hydroxy-2-methylpropyl group; alkoxyalkyl groups such as a 2-methoxyethyl group, a 2-ethoxyethyl group, and a 2-phenoxyethyl group; and aryl groups such as a benzyl group and a phenyl group. It may also be an organic group composed of a combination of one or more of these groups.

The number of carbon atoms in an alkoxy group as the substituent is preferably 1-10, and more preferably 1-6. Specifically, examples of the alkoxy group include a methoxy group, an ethoxy group, and a phenoxy group.

When a plurality of (meth)acrylic ester structural units (structural units (a)) exist in an acrylic resin, the plurality of R₃₁ and R₃₂ may be the same or different from each other. Among these, a (meth)acrylic ester structural unit in which R₃₁ is a methyl group and R₃₂ is a methyl and/or ethyl group is preferred, and a methacrylic ester structural unit in which R₃₁ is a methyl group and R₃₂ is a methyl group is more preferred.

Structural unit (b) is a structural unit derived from an aliphatic vinyl compound.

In General formula (11) above, R₃₃ is hydrogen or a methyl group. Moreover, R₃₄ is a cyclohexyl group or a cyclohexyl group with a substituent selected from a hydrocarbon group having 1-4 carbon atoms, a hydroxyl group, an alkoxy group, and a halogen atom.

Examples of the hydrocarbon group as the substituent include alkyl groups such as a methyl group, an ethyl group, a propyl group, and a butyl group.

The number of carbon atoms in the alkoxy group as the substituent is preferably 1-10, and more preferably 1-6. Specifically, examples of the alkoxy group include a methoxy group, an ethoxy group, and a phenoxy group.

Examples of the halogen atom as the substituent include a fluorine atom, a chlorine atom, and a bromine atom, where a chlorine atom and a bromine atom are particularly preferred.

When a plurality of structural units (b) exist in an acrylic resin, the plurality of R₃₃ and R₃₄ may be the same or different from each other. Among these, an aliphatic vinyl structural unit in which R₃₃ is hydrogen or a methyl group and R₃₄ is a cyclohexyl group is preferred, and an aliphatic vinyl structural unit in which R₃₃ is hydrogen and R₃₄ is a cyclohexyl group is more preferred.

Preferably, the above-described acrylic resin that can be used in the thermoplastic resin consists mainly of the structural unit (a) and the structural unit (b). The total percentage of the structural unit (a) and structural unit (b) with respect to the total of all structural units of the acrylic resin is, for example, 85-100 mol%, preferably 90-100 mol%, more preferably 95-100 mol%, and still more preferably 98-100 mol%.

In addition, the percentage of the structural unit (a) with respect to the total of all structural units of the acrylic resin is, for example, 55-80 mol%, preferably 56-79 mol%, more preferably 57-78 mol%, and still more preferably 58-77 mol%.

In addition, the percentage of the structural unit (b) with respect to the total of all structural units of the acrylic resin is, for example, 10-45 mol%, preferably 11-44 mol%, more preferably 12-43 mol%, and still more preferably 13-42 mol%. If the percentage of the structural unit (b) with respect to the total of all structural units of the acrylic resin is less than 10%, the heat resistance of the acrylic resin may be deteriorated or the dimensional stability of the acrylic resin may be deteriorated in a humid environment, which is undesirable.

The acrylic resin may contain a structural unit other than the structural units (a) and (b) to the extent where the optical properties are not impaired. Examples of such structural unit include, but are not limited to, structural units derived from acrylonitrile, acrylic acid, methacrylic acid, maleic anhydride, phenylmaleimide, and cyclohexylmaleimide.

While the method for producing the acrylic resin is not particularly limited, it is, for example, preferably a method where a (meth)acrylic ester monomer is copolymerized with an aromatic vinyl monomer having at least one type of benzene ring skeleton and then the benzene ring is hydrogenated, or a method where a (meth)acrylic ester monomer is copolymerized with an aliphatic vinyl monomer having at least one type of cyclohexyl ring skeleton. The former method is particularly favorable.

Examples of the (meth)acrylic acid ester monomer include, but are not particularly limited to, methyl (meth)acrylate, ethyl (meth)acrylate, butyl (meth)acrylate, lauryl (meth)acrylate, stearyl (meth)acrylate, cyclohexyl (meth)acrylate, isobornyl (meth)acrylate, (2-hydroxyethyl) (meth)acrylate, (2-hydroxypropyl) (meth)acrylate, (2-hydroxy-2-methylpropyl) (meth)acrylate, (2-methoxyethyl) (meth)acrylate, (2-ethoxyethyl) (meth)acrylate, (2-phenoxyethyl) (meth)acrylate, benzyl (meth)acrylate, and phenyl (meth)acrylate. Among these, methyl methacrylate is preferred.

Specific examples of the aromatic vinyl monomer include styrene, α-methylstyrene, p-hydroxystyrene, alkoxystyrene, chlorostyrene, bromostyrene, and derivatives thereof. Among these, styrene and α-methylstyrene are preferred.

Examples of the aliphatic vinyl monomer include vinylcyclohexane, isopropenylcyclohexane, and 1-propenyl-2-methylcyclohexane. Among these, vinylcyclohexane and isopropenylcyclohexane are preferred.

A known method can be employed for the polymerization of the (meth)acrylic ester monomer and the aromatic vinyl monomer, the acrylic resin can be produced, for example, by bulk polymerization method, solution polymerization method, suspension polymerization method, or emulsion polymerization method. According to the solution polymerization method, polymerization is performed, for example, by a method where a monomer composition containing a solvent, a monomer, a chain transfer agent, and a polymerization initiator is continuously fed into a complete mixing tank to be polymerized continuously at 100-180°C.

Examples of the solvent used for solution polymerization include hydrocarbon-based solvents such as toluene, xylene, cyclohexane, and methylcyclohexane; ester-based solvents such as ethyl acetate and methyl isobutyrate; ketone-based solvents such as acetone and methyl ethyl ketone; ether-based solvents such as tetrahydrofuran and dioxane; and alcohol-based solvents such as methanol and isopropanol.

Hydrogenation reaction after the polymerization of the (meth)acrylic ester monomer and the aromatic vinyl monomer is carried out in a suitable solvent. The solvent used for this hydrogenation reaction may be the same as or different from the polymerization solvent described above. Examples of the solvent include hydrocarbon-based solvents such as cyclohexane and methylcyclohexane; ester-based solvents such as ethyl acetate and methyl isobutyrate; ketone-based solvents such as acetone and methyl ethyl ketone; ether-based solvents such as tetrahydrofuran and dioxane; and alcohol-based solvents such as methanol and isopropanol.

The method of hydrogenation is not particularly limited and any known method can be used. For example, hydrogenation can be performed in a batch mode or a continuous flow mode at a hydrogen pressure of 3-30 MPa and a reaction temperature of 60-250°C. By setting the temperature to 60°C or higher, the reaction time will not be too long, and by setting the temperature to 250°C or lower, there is little chance of molecular chain cleavage or hydrogenation of the ester moiety.

Examples of the catalyst used for the hydrogenation reaction include solid catalysts consisting of a metal such as nickel, palladium, platinum, cobalt, ruthenium, or rhodium, or an oxide, salt, or complex compound of such metal supported on a porous support such as carbon, alumina, silica, silica-alumina, or diatomite.

In the hydrogenation reaction, 70% or more of the aromatic rings in the aromatic vinyl monomer is preferably hydrogenated. In other words, the percentage of unhydrogenated moieties of the aromatic rings in the aromatic vinyl structural unit is preferably less than 30%. If the percentage of the unhydrogenated moieties of the aromatic rings exceeds 30%, transparency may be deteriorated when used as the acrylic resin. The percentage of the unhydrogenated moieties of the aromatic rings is preferably less than 10%, more preferably less than 5%, and particularly preferably less than 1%. From the viewpoint of productivity, the percentage does not necessarily have to be 0%.

Polymerization of the (meth)acrylic ester monomer and the aromatic vinyl monomer can be conducted by a known method such as a method described in Japanese Unexamined Patent Application Publication No. S63-3011 or S63-170475.

The glass transition temperature of the acrylic resin is preferably in the range of 110-160°C, more preferably 115-150°C.

In addition, one type of acrylic resin can be used alone or two or more types of acrylic resins can be used in combination.

The weight (mass)-average molecular weight (Mw) of the thermoplastic resin in terms of polystyrene equivalent is, for example, 10,000-500,000, preferably 10,000-300,000, more preferably 15,000-100,000, and still more preferably 20,000-50,000.

The range of the weight-average molecular weight (Mw) in terms of polystyrene equivalent mentioned above relates primarily to polycarbonate resins, polyester resins, and polyester carbonate resins.

While the weight-average molecular weight (Mw) of the acrylic resin contained in a thermoplastic resin may be in the above-mentioned range in terms of polystyrene equivalent, it is preferably 100,000-200,000, and more preferably 110,000-170,000.

### [2. Properties of thermoplastic resin composition]

A thermoplastic resin composition of the present invention containing the compounding agent can maintain transmittance (%) at a higher level than thermoplastic resin compositions without the compounding agent.

For example, the value of transmittance (%) of the thermoplastic resin composition at a wavelength of 370-400 nm in accordance with JIS K7105 is higher, by 1.0 (%) or more, and preferably by 2.0 (%) or more, than that of a reference resin composition having the same composition but without the compounding agent. In other words, when the value of transmittance (%) of a reference resin composition without the compounding agent at a wavelength of 370-400 nm in accordance with JIS K7105 is compared with the value of transmittance (%) of the thermoplastic resin composition of the present invention at the same wavelength (i.e., wavelength of 370-400 nm in accordance with JIS K7105), the thermoplastic resin composition had higher transmittance value and a difference of 1.0 (%) or more, preferably 2.0 (%) or more, was realized between these values. The value of transmittance of the thermoplastic resin composition is higher, preferably by 3.0 (%) or more, and more preferably by 4.0 (%) or more, than the value of transmittance of the reference resin composition.

The above-mentioned difference in the transmittance (%) values was also observed, for example, at a wavelength of 380 nm-400 nm in accordance with JIS K7105.

Moreover, for example, the value of transmittance (%) of the thermoplastic resin composition at a wavelength of 370-400 nm in accordance with JIS K7105 is 1.1 times or more higher than that of a reference resin composition having the same composition but without the compounding agent. In other words, when the values of transmittance (%) of a reference resin composition without the compounding agent at a wavelength of 370-400 nm in accordance with JIS K7105 is compared with the value of transmittance (%) of the thermoplastic resin composition of the present invention at the same wavelength (i.e., wavelength of 370-400 nm in accordance with JIS K7105), the thermoplastic resin composition had higher transmittance value than that of the reference resin composition and the difference thereof was 1.1 times or more. The value of transmittance of the thermoplastic resin composition is preferably 1.3 times or more and more preferably 1.5 times or more higher than the value of transmittance of the reference resin composition.

Addition of additives, such as a mold release agent, an antioxidant, and the like, to a thermoplastic resin composition of the present invention tends to decrease the transmittance value of the resulting thermoplastic resin composition. However, decrease in the transmittance value can be prevented or suppressed in the thermoplastic resin composition to which the above-mentioned compounding agent has been added.

Moreover, a thermoplastic resin composition in one aspect of the present invention has a lower YI value than a reference thermoplastic resin composition having the same composition as said thermoplastic resin composition but without the compounding agent. Specifically, the YI value (e.g., YI value according to JIS K 7105) of the thermoplastic resin composition containing the above-described compounding agent can be 0.20 or more lower than the YI value of a thermoplastic resin composition having the same composition but without the compounding agent. The difference between these YI values can be, for example, 0.50 or more, 0.80 or more, 0.90 or more, 1.0 or more, or even 1.1 or more.

The YI value (e.g., YI value according to JIS K 7105) of the thermoplastic resin composition containing the above-described compounding agent is preferably 1.2 or more lower than the YI value of a thermoplastic resin composition having the same composition but without the compounding agent. The difference between these YI values is more preferably 1.5 or more, 1.80 or more, or 2.0 or more, and still more preferably 2.2 or more, 2.5 or more, 2.7 or more, or even 3.0 or more.

Moreover, the YI value (e.g., in accordance with JIS K 7105) of the thermoplastic resin composition containing the above-described compounding agent represented by General formula (1) is preferably 0.2 or more lower than the YI value of a thermoplastic resin composition that contains, as a compounding agent, the same amount of monomer that corresponds to the above-described compounding agent represented by General formula (1) (e.g., a compound that shares the same General formula (1) except that none of R₁-R₅ in General formula (1) contains the cyclic structure represented by General formula (1-1)). In addition, the difference between these YI values is more preferably 0.3 or more, 0.4 or more, or 0.5 or more, and still more preferably 0.6 or more, 0.7 or more, 0.8 or more, 0.9 or more, or even 1.0 or more.

As described above, the thermoplastic resin composition of the present invention is suitable for applications like an optical material, because it can maintain high transmittance, realize improved color hue as indicated by a low YI value, etc. The thermoplastic resin composition of the present invention can suitably be used especially as an optical material.

Furthermore, the thermoplastic resin composition of the present invention has high heat resistance and transparency, and is expected to have an effect of reducing the amount of volatile components. Among the thermoplastic resin compositions of the present invention, the effect of reducing the amount of volatile components at high temperatures has been confirmed especially in the polyester resin composition as will be described in detail below and thus the odor generated during heating can be suppressed. For this reason, the thermoplastic resin compositions of the present invention, mainly the polyester resin compositions, are useful, for example, as plastics for food containers and packaging.

For example, a thermoplastic resin composition in one aspect of the present invention is as effective as or more effective than a reference thermoplastic resin composition having the same composition as said thermoplastic resin composition but without the compounding agent in suppressing volatile components. In other words, the thermoplastic resin composition can suppress the amount of volatile components that are generated under the predetermined conditions, including heating at 250°C for 5 minutes.

Examples of the volatile component include formaldehyde, acetaldehyde, acetone, 2,3-butanedione, acetic acid, and formic acid.

### [3. Method for producing thermoplastic resin composition]

A method for producing a thermoplastic resin composition of the present invention includes a step of adding the above-described compounding agent to a thermoplastic resin. By the step of adding the compounding agent to a thermoplastic resin, the transmittance (especially the transmittance value at a low wavelength) of the thermoplastic resin can be maintained better than that of a thermoplastic resin to which the compounding agent is not added.

### [4. Method for improving transmittance of thermoplastic resin composition]

A method for improving transmittance of a thermoplastic resin composition of the present invention includes a step of adding the above-described compounding agent to a thermoplastic resin. By the step of adding the compounding agent to a thermoplastic resin, the transmittance (especially transmittance value at a low wavelength) of the thermoplastic resin can be improved. Specifically, the transmittance value of a thermoplastic resin composition to which the compounding agent has been further added is improved compared to a thermoplastic resin to which an additive different from the compounding agent has been added.

### [5. Method for improving hue of thermoplastic resin composition]

A method for improving the hue of a thermoplastic resin composition of the present invention includes a step of adding the above-described compounding agent to a thermoplastic resin. By the step of adding the compounding agent to a thermoplastic resin, the hue of the thermoplastic resin can be enhanced or improved, and the transparency of the thermoplastic resin can be increased.

As described above, the YI value (e.g., value in accordance with JIS K 7105) of a thermoplastic resin composition containing the above-described compounding agent can be 0.2 or more lower than the YI value of a thermoplastic resin composition that shares the same components but that does not contain the compounding agent. Therefore, a thermoplastic resin composition containing the compounding agent tends to be superior in hue, with the yellowish coloration that usually occurs being suppressed. Specifically, addition of the compounding agent to a thermoplastic resin composition can lower the YI value of the thermoplastic resin composition, and the difference in the YI values between the presence and absence of the compounding agent can be, for example, 0.20 or more, 0.50 or more, 0.80 or more, 0.90 or more, 1.0 or more, or even 1.1 or more, as described above.

When the above-mentioned compounding agent is added to a thermoplastic resin composition, the YI value (e.g., in accordance with JIS K 7105) of the thermoplastic resin composition is preferably 1.2 or more lower than the YI value of a thermoplastic resin composition having the same composition but without the compounding agent. The difference between these YI values is more preferably 1.5 or more, 1.80 or more, or 2.0 or more, and still more preferably 2.2 or more, 2.5 or more, 2.7 or more, or even 3.0 or more.

Addition of the above-described compounding agent represented by General formula (1) to a thermoplastic resin composition can also make the YI value (e.g., in accordance with JIS K 7105) to be preferably 0.2 or more lower than the YI value of a thermoplastic resin composition that has been added with, as a compounding agent, the same amount of monomer that corresponds to the above-described compounding agent represented by General formula (1) (e.g., a compound that shares the same General formula (1) except that none of R₁-R₅ in General formula (1) contains the cyclic structure represented by General formula (1-1)). In addition, the difference between these YI values is more preferably 0.3 or more, 0.4 or more, or 0.5 or more, and still more preferably 0.6 or more, 0.7 or more, 0.8 or more, 0.9 or more, or even 1.0 or more.

### [6. Method for reducing haze of thermoplastic resin compositions]

Furthermore, the step of adding the above-mentioned compounding agent to a thermoplastic resin can also reduce the haze value (e.g., haze value according to JIS K-7361 and JIS K-7136) of the thermoplastic resin. In other words, the haze value of the thermoplastic resin composition tends to be lower than that of a reference resin composition having the same composition as the thermoplastic resin composition but without the compounding agent. The difference between these haze values is, for example, 0.01 or more, 0.02 or more, 0.03 or more, 0.04 or more, or 0.05 or more.

### [7. Molded article]

The thermoplastic resin composition of the present invention can be used in extrusion molding, blow molding, injection molding, and the like. Examples of the resulting molded article include extruded articles, hollow molded articles, precision parts, and thin injection molded products.

The thermoplastic resin composition of the present invention can maintain a good transmittance value. Therefore, the thermoplastic resin compositions of the present invention are particularly suitable as optical materials, etc. Examples of the molded article that can be manufactured using such a thermoplastic resin composition include an optical lens, an optical film, a transparent conductive substrate used in a liquid crystal display, an organic EL display, a solar cell, etc., an optical disc, a liquid crystal panel, an optical card, a sheet, a film such as a retardation film, an optical fiber, a connector, a deposited plastic reflective mirror, a display, and a touch panel. These molded articles for optical use have high transmittance even if they contain additives added for various applications.

Specific examples of the molded article that uses the thermoplastic resin of the present invention as an optical material or for an application in the related fields include optical media such as a compact disc, a digital video disc, a mini disc, and a magneto-optical disc, optical communication media such as an optical fiber, optical components such as a headlamp lens for cars, etc. and a lens for cameras, a siren light cover, a lighting lamp cover, an alternative to window glass for vehicles (e.g., trains and automobiles), an alternative to window glass for households, lighting components such as a sunroof and a greenhouse roof, lenses or cases for goggles, sunglasses, and eyeglasses, housings for office automation equipment such as a copier and a facsimile, housings for household appliances such as a television and a microwave oven, and electronic components such as a connector and an IC tray. Other examples include, but are not limited to, protective equipment such as a helmet, a protector, and a protective mask, household goods such as a baby bottle, a dish, and a tray, medical supplies such as a case for dialysis and a denture, and miscellaneous goods such as a packaging material, a writing tool, and stationery.

Examples of particularly favorable molded articles that are obtained using the thermoplastic resin composition of the present invention include the following, which require high heat resistance and high transparency: specifically, a headlamp lens, a meter panel, a sunroof, etc. as automotive components, and an alternative to a glass window, and an outer panel part; various films such as a liquid crystal display, a light guide plate, an optical disc substrate, and a housing for a smartphone or other electronic device; and a construction material such as a transparent sheet.

Even for molded articles that do not strictly require the excellent transparency of the thermoplastic resin composition of the present invention, use of a highly transparent resin composition as the raw material is found to be beneficial in making it easier to control the degree of coloring when using a coloring agent such as a pigment or dye.

In addition, if necessary, the surface of the molded optical article may be provided with a coating layer, such as an anti-reflective layer or a hard coat layer. The anti-reflective layer may be either a single- or multi-layer, and it may be either organic or inorganic, preferably inorganic. Specifically, examples include oxides and fluorides such as silicon oxide, aluminum oxide, zirconium oxide, titanium oxide, cerium oxide, magnesium oxide, and magnesium fluoride.

### [7-1. Optical Lens]

An optical lens manufactured using the thermoplastic resin composition of the present invention will have excellent transmittance and an optical lens manufactured using the polycarbonate resin of the present invention will have a high refractive index, a low Abbe number, and high moist heat resistance, and therefore it is extremely useful for use in telescopes, binoculars, television projectors, and in other fields where expensive high-refractive-index glass lenses have conventionally been used. If necessary, the optical lens is suitably used in the form of an aspheric lens. Since spherical aberration can be reduced to virtually zero with a single aspherical lens, there is no need to remove spherical aberration by combining multiple spherical lenses, which enables weight reduction and production cost reduction. Therefore, the aspherical lens is especially useful as a camera lens among other optical lenses.

Optical lenses can be molded by any method, such as injection molding, compression molding, or inj ection-compression molding. According to the present invention, an aspheric lens with a high refractive index and low birefringence, which is technically difficult to produce from a glass lens, can be obtained more easily.

To avoid contamination of the optical lens with foreign matter as much as possible, the molding environment obviously needs to be a low dust environment, which is preferably class 6 or better, and more preferably class 5 or better.

An optical lens manufactured using the thermoplastic resin composition of the present invention can be obtained by injection molding the above-described polycarbonate copolymer of the present invention into a lens shape using an injection molding machine or an injection compression molding machine. Molding conditions for injection molding are not limited, but the molding temperature is preferably 180-280°C. In addition, the injection pressure is preferably 50-1,700 kg/cm².

To avoid contamination of the optical lens with foreign matter as much as possible, the molding environment obviously needs to be a low dust environment, which is preferably class 1000 or better, and more preferably class 100 or better.

An optical lens containing the thermoplastic resin composition of the present invention may suitably be implemented in the form of an aspherical lens as necessary. Since spherical aberration can be reduced to virtually zero with a single aspherical lens, there is no need to remove spherical aberration by combining multiple spherical lenses, which enables weight reduction and production cost reduction. Therefore, the aspherical lens is especially useful as a camera lens among other optical lenses. The astigmatism of the aspheric lens is preferably 0-15 mλ, and more preferably 0-10 mλ.

The thickness of the optical lens manufactured using the thermoplastic resin composition of the present invention can be set in a wide range depending on the application and is not particularly limited, but it is preferably 0.01-30 mm, and more preferably 0.1-15 mm. If necessary, the surface of the optical article of the present invention may be provided with a coating layer, such as an anti-reflective layer or hard coat layer. The anti-reflective layer may be either a single- or multi-layer, and it may be either organic or inorganic, preferably inorganic. Specifically, examples include oxides and fluorides such as silicon oxide, aluminum oxide, zirconium oxide, titanium oxide, cerium oxide, magnesium oxide, and magnesium fluoride. Among these, silicon oxide and zirconium oxide are preferable, and a combination of silicon oxide and zirconium oxide is more preferable. As to the anti-reflective layer, the combination of single/multi-layers, the composition and thickness thereof, and the like are not particularly limited, but it preferably has a two-layer or three-layer structure, particularly preferably a three-layer structure. The anti-reflective layer as a whole is preferably formed to have a thickness that is 0.00017-3.3% of the thickness of the optical lens, specifically 0.05-3 µm, and particularly preferably 1-2 µm.

### [7-2. Optical Film]

An optical film manufactured using the thermoplastic resin composition of the present invention has excellent transparency and thermal stability, and thus is suitable for use in a LCD substrate film, an optical memory card, etc.

To avoid contamination of the optical film with foreign matter as much as possible, the molding environment obviously needs to be a low dust environment, which is preferably class 6 or better, and more preferably class 5 or better.

### EXAMPLES

Hereinafter, the present invention will be described in more detail. The present invention, however, is not limited to the following examples, and may be modified and carried out as desired without departing from the gist of the present invention.

### [Evaluation methods 1]

The evaluation methods employed in the examples and comparative examples using polycarbonate resins, which will be described below in detail, were as follows.

### (1-1) Transmittance (spectral transmittance) [%]

In Example 1, Comparative example 1, Comparative example 2, and Reference example 1, which will be described in detail below, the transmittance was measured as follows. Pellets of a thermoplastic resin composition obtained by the following method were dried in a hot-air circulating dryer at 120°C for 5 hours, and then molded into a flat plate test piece that was 40 mm wide, 40 mm long, and 3 mm thick, using an injection molding machine (ROBOSHOT S-2000i30A manufactured by Fanuc Corporation) under the conditions of resin temperature of 260°C, mold temperature of 130°C, and molding cycle of 30 seconds. The transmittance (%) of the 3 mm-thick part of the flat plate test piece section was measured at wavelengths of 370 nm, 380 nm, and 400 nm using a spectrophotometer ("U-4100", manufactured by Hitachi High-Technologies Corporation) in accordance with JIS K7105.

Furthermore, in Examples 2-5, Comparative example 3, and Comparative example 4, transmittance (%) was measured under the same conditions as in Example 1, etc. at wavelengths of 380 nm, 390 nm, and 400 nm while setting the resin temperature to 280°C and using a spectral haze meter (SH7000, manufactured by Nippon Denshoku Industries Co., Ltd.).

### (1-2) Mass-average molecular weight (Mw)

The mass (weight)-average molecular weights of the resins and resin compositions were determined by gel permeation chromatography (GPC) and calculated in terms of standard polystyrene. The equipment, columns, and measurement conditions were as follows.
·GPC equipment: HLC-8420GPC, manufactured by Tosoh Corporation
·Columns: TSKgel SuperHM-M × 3 columns, manufactured by Tosoh Corporation, TSKgel guard column SuperH-H × 1 column, manufactured by Tosoh Corporation, and TSKgel SuperH-RC × 1 column, manufactured by Tosoh Corporation
·Detector: RI detector
. Standard polystyrenes: Standard polystyrene kit PStQuick C, manufactured by Tosoh Corporation
. Sample solution: 0.2 mass% tetrahydrofuran solution
·Eluent: tetrahydrofuran
·Flow rate of eluent: 0.6 mL/min
·Column temperature: 40°C

### (1-3) Total transmittance and haze

The resin composition samples of the following examples and comparative examples, which were molded to have a thickness of 3 mm, were subjected to measurements according to JIS K-7361 and JIS K-7136.

Measurement instrument: Spectral haze meter SH7000, manufactured by Nippon Denshoku Industries Co., Ltd.

### (1-4) YI value of resin composition

YI values of the samples molded to have a thickness of 3 mm were measured according to JIS K-7105 using a spectral haze meter.

Instrument for measuring YI value: Spectral haze meter SH7000, manufactured by Nippon Denshoku Industries Co., Ltd.

Sample molding: Samples were molded by injection molding. Molding conditions are shown below.
Molding equipment: NP-7, manufactured by Nissei Plastic Industrial Co., Ltd.
Cylinder temperature: 240°C
Mold temperature: 40°C
Mold: 3 mm disc
(1-4a) YI value and YI increase rate (%)

The YI increase rate (%) was calculated by the following equation based on the YI values before and after the weatherability test, which will be described in detail below. YI increase rate (%) = (YI value after weatherability test-YI value before weatherability test(radiation time: 0 hours))/(YI value before weatherability test (radiation time: 0 hours)) × 100

### (1-4b) Lightfastness test

Lightfastness tests were conducted on the samples used for the YI value measurements described above, i.e., samples molded to have a thickness of 3 mm. The test conditions are shown below.

Equipment: Atlas Weather-Ometer Ci4000, manufactured by Toyo Seiki Seisakusho, Ltd.
Filter inside the lamp: Type S
Filter outside the lamp: Type S
Irradiance: 60W/m² (300-400 nm)
Black panel temperature: 63°C
Humidity: 50%
Operating conditions: Water was sprayed for 18 minutes out of 120 minutes
Radiation time: 0 hours (no radiation), 400 hours, 800 hours

### [Evaluation methods 2]

The methods for evaluating polyester resins and polyester resin compositions, which will be described below in detail, employed in the examples were as follows.

### (2-1) Percentages of diol unit having cyclic acetal skeleton and alicyclic diol unit

The percentages of a unit derived from a diol having a cyclic acetal skeleton and a unit derived from an alicyclic diol in the polyester resin were determined by ¹H-NMR measurement. Measurement was performed using a measurement equipment Ascend TM500, manufactured by Bruker BioSpin K.K. Deuterated chloroform was used as the solvent.

### (2-2) Glass transition temperature

The glass transition temperature (Tg) of the polyester resin was measured using a differential scanning calorimeter (model: DSC/TA-50WS) manufactured by Shimadzu Corporation, with approximately 10 mg of sample placed in an unsealed aluminum container at a temperature increase rate of 20°C/min in a nitrogen gas flow (30 ml/min). The glass transition temperature was defined as the temperature at which the DSC curve changed by half of the difference between the baselines before and after the transition.

### (2-3) YI value of pellets

The YI value was measured in accordance with JIS K-7105 using "ZE2000" manufactured by Nippon Denshoku Industries Co., Ltd.

### (2-4) Amounts of volatile components

The amount of volatile component (%) was defined as the relative peak area value of the low molecular weight compound (volatile component) obtained by GC-MS (headspace) converted per unit weight of the sample, i.e., the relative peak area value of the volatile component in the example, etc. when the peak area value of the volatile component in Comparative example 5 or 8 (described below) corresponding to the example, etc. was set to 100%.

Specifically, the evaluation was conducted as follows.

0.3 g of dried pellets were placed in a HS vial and sealed with a septum under air atmosphere. Immediately after heating at 250°C for 5 minutes in a block heater, the analysis was started using a headspace-GC-MS equipment. In the analysis, mass chromatograms were extracted with ions characteristic of each compound, and the peak area value per unit weight was obtained for each sample. The equipment and the measurement conditions were as follows.
[HS]
Agilent G1888
Heating temperature and time: 250°C, 5 min. (external thermostat)
+230°C, 1 min.
Loop temperature: 240°C
TR LINE temperature: 250°C
Vial equilibration: 1 min., vial pressurization: 0.5 min. (15 psi)
Loop fill: 0.2 min., loop equilibration: 0.2 min., injection: 0.1 min.
GC Cycle: Analysis 35 min. + Equilibration 10 min.
Carrier pressure: 16.5 psi
[GC]
Agilent 8890
Column: DB-WAX (Φ0.25 mm × 60 × t0.5 µm)
Oven temperature: 40°C for 5 min., then ramp at 10°C/min until 240°C (hold for 10 min.)
Column flow: He 1.0 ml/min.
Split ratio: 1/10
Injection temperature: 240°C
MSD transfer line: 240°C
[MS]
Agilent 5977B MSD
Gain factor: 1
Scan range: m/z = 29-700

### <Synthesis of thermoplastic resin: PC1>

As raw materials, 20.86 kg (47.56 mol) of 9,9-bis[4-(2-hydroxyethoxy)-phenyl]fluorene (BPEF), 10.5 kg (49.02 mol) of diphenyl carbonate (DPC), and 16 milliliters of 2.5 × 10⁻² mol/liter aqueous sodium bicarbonate solution (4.0 × 10⁻⁴ mol, i.e., 8.4 × 10⁻⁶ mol per 1 mol of the total dihydroxy compound) were placed in a 50 L reactor equipped with a stirrer and a distillation unit and heated to 180°C in a nitrogen atmosphere at 760 mmHg. After 30 minutes of heating, complete dissolution of the raw materials was confirmed, and then the mixture was stirred for 120 minutes under the same conditions. The pressure was then reduced to 200 mmHg while the temperature was simultaneously increased to 200°C at a rate of 60°C/hr. During this, distillation of phenol as the byproduct was confirmed to have started. Thereafter, the temperature was maintained at 200°C for 20 minutes to allow the reaction to take place. The temperature was further increased to 230°C at a rate of 75°C/hr. Ten minutes after the end of the temperature increase, the pressure was reduced to 1 mmHg or less by spending 2 hours while maintaining this temperature. The temperature was then increased to 245°C at a rate of 60°C/hr and stirring was performed for another 40 minutes. At the end of the reaction, nitrogen was introduced into the reactor to recover normal pressure. The generated resin was taken out from the reactor while pelletizing it to obtain a thermoplastic resin, i.e., polycarbonate resin (PC 1: homopolymer resin of BPEF).

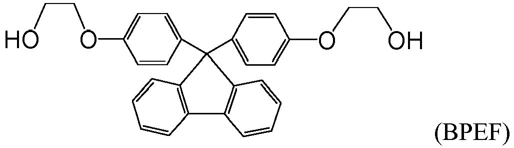

### <Synthesis of thermoplastic resin: PC2>

Into 40 liters of 5 mass% aqueous sodium hydroxide solution, 3,634 g (15.92 mol) of 2,2-bis(4-hydroxyphenyl)propane and 30 g of hydrosulfite were dissolved. To this solution, 17 liters of dichloromethane was added while stirring and 2,100 g (21.23 mol) of phosgene was blown therein over 15 minutes while keeping the temperature at 15°C. After the phosgene blowing, 91.63 g (0.61 mol) of p-tert-butylphenol was added as a molecular weight regulator to the reaction solution, to which 10 liters of 5 mass% sodium hydroxide solution and 20 liters of dichloromethane were further added. The reaction solution was emulsified by vigorous stirring. Then, 20 milliliters of triethylamine was added, and the reaction solution was stirred at 20°C to 25°C for about 1 hour to allow the polymerization reaction to proceed. After the polymerization, the reaction solution was separated into an aqueous phase and an organic phase, and the organic phase was neutralized with phosphoric acid and then rinsed with water. The resulting polymer solution was dropped into warm water that was kept at 50°C, the solvent was removed by evaporation, and at the same time the solid was ground to obtain white powdery precipitate. The resulting precipitate was filtered and dried at 120°C for 24 hours to obtain polymer powder (thermoplastic resin, i.e., polycarbonate resin (PC2: bisphenol A-based PC resin)).

### <Synthesis of Compounding agent (A) (dimer)>

Dimeric Compounding agent (A) represented by the following formula was synthesized as follows.

21.3 parts by mass of 2,4-di-tert-butylphenol (manufactured by Tokyo Chemical Industry Co., Ltd.), 10.4 parts by mass of glyoxylic acid monohydrate (manufactured by FUJIFELM Wako Pure Chemical Corporation), 0.051 parts by mass of p-toluenesulfonic acid monohydrate (manufactured by Tokyo Chemical Industry Co., Ltd.), and 40 parts by mass of 1,2-dichloroethane (manufactured by Tokyo Chemical Industry Co., Ltd.) were weighed into a flask.

The flask with the weighed contents was then placed in an oil bath at 105°C, and heating was continued until the internal temperature reached 86°C while removing the distillate using a Dean-Stark tube and adding the same amount of 1,2-dichloroethane as the amount of the distillate.

Subsequently, the oil bath was heated to 120°C to perform concentration until the amount of 1,2-dichloroethane remaining became less than 10 parts by mass. The reaction solution was then cooled to room temperature (23°C), and 100 parts by mass of hexane and 100 parts by mass of water were added to the reaction solution and stirred. Thereafter, the hexane layer was collected, and 100 parts by mass of saturated saline was added to the reaction mixture and stirred.

Then, the hexane layer was collected, and 1 part by mass of magnesium sulfate (manufactured by FUJIFILM Wako Pure Chemical Corporation) was added to the reaction solution and allowed to dry for 1 hour.

Subsequently, the magnesium sulfate was filtered off, and the hexane layer was concentrated to dryness using an evaporator to obtain 27.0 parts by mass of a brown viscous substance (1) containing the compound represented by Formula (1a) below.

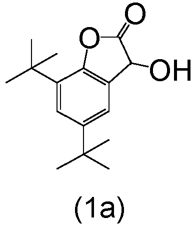

Next, 4.41 parts by mass of ethylene glycol diphenyl ether (manufactured by Tokyo Chemical Industry Co., Ltd.), 15.88 parts by mass of tin(IV) chloride pentahydrate (manufactured by Tokyo Chemical Industry Co., Ltd.), and 81 parts by mass of 1,2-dichloroethane (manufactured by Tokyo Chemical Industry Co., Ltd.) were weighed and added to the brown viscous substrate (1), and the resultant was refluxed for 4 hours using an oil bath at 105°C.

After 40 parts by mass of 1,2-dichloroethane was removed, the reaction solution was cooled to room temperature (23°C), and 200 parts by mass of ethyl acetate and 200 parts by mass of water were added to the reaction solution.

Subsequently, the ethyl acetate layer was collected, and 200 parts by mass of saturated saline was added to the reaction solution and stirred. The ethyl acetate layer was collected, and separation/purification was repeated with 200 parts by mass of saturated saline until the pH of the saturated saline layer became 6.

Then, the ethyl acetate layer was collected, 1 part by mass of magnesium sulfate was added to the reaction solution, and the resultant was allowed to dry for 1 hour.

Next, the magnesium sulfate was filtered through celite, and the ethyl acetate layer was concentrated to dryness using an evaporator to obtain 21 parts by mass of a brown viscous substance (2).

The obtained brown viscous substance (2) was purified by column chromatography to obtain dimeric Compounding agent (A) represented by Formula (A) below.

¹H-NMR (Nuclear Magnetic Resonance) data of the obtained dimeric Compounding agent (A) and its attribution are shown below.

¹HNMR (CDCl₃ = 7.26 ppm) δ (ppm) = 1.29 (18H,s), 1.43 (18H,s), 4.31 (4H,s), 4.78 (2H,s), 6.94 (4H,d), 7.04 (2H,s), 7.16 (4H,d), 7.32 (2H,s)

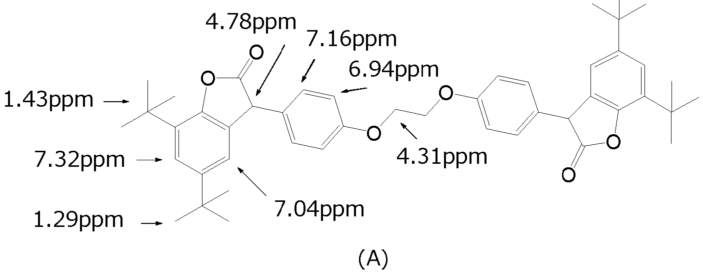

### <Example 1, etc.>

PC1 obtained in Synthesis example 1, additives (mold release agent, antioxidant), and the compounding agent were mixed in the mass ratio shown in Table 1 below in a dry process using a tumbler, melt-kneaded using a twin-screw extruder (IPT type 35 mm corotating twin-screw extruder, LID = 38, manufactured by IPEC) at a cylinder temperature of 250°C, vent pressure of 25 Torr, and discharge rate of 20 kg/hour, and extruded as a strand to obtain a pelletized thermoplastic resin, i.e., polycarbonate resin composition. The YI value, transmittance, etc. of the obtained resin composition were measured and the results are shown in Table 1.

**[Table 1]**

| | | | **Example 1** | **Comparative example 1** | **Comparative example 2** | **Reference example 1** |
|---|---|---|---|---|---|---|
| **Resin** | | | **PC1** | **PC1** | **PC1** | **PC1** |
| **Mold release agent** | | **S-100A** | **1,000** | **1,000** | **1,000** | **1,000** |
| **Antioxidant** | **Phosphite-based** | **PEP-36** | **200** | **200** | **0** | **0** |
| | **[ppm]** | | | | | |
| | **Phenolic** | **AO-60** | **1,000** | **1,000** | **0** | **0** |
| | **[ppm]** | | | | | |
| **Compounding agent [ppm]** | | **(A) Dimer** | **200** | **0** | **0** | **200** |
| | | **(B) Monomer** | **0** | **0** | **200** | **0** |
| **Physical properties** | **YI** | | **1.06** | **2.19** | **3.06** | **3.00** |
| | **Haze** | | **0.45** | **0.51** | **0.33** | **0.33** |
| | **Total transmittance [%]** | | **87.78** | **88.49** | **88.05** | **87.87** |
| | **Spectral transmittance [%]** | **400 nm** | **84.52** | **82.32** | **78.79** | **77.58** |
| | | **380 nm** | **80.64** | **79.50** | **69.90** | **66.59** |
| | | **370 nm** | **76.81** | **76.92** | **64.56** | **60.10** |

| | | | | | | |
|---|---|---|---|---|---|---|
| Antioxidant AO-60: Pentaerythritol-tetrakis[3-(3,5-di-tert-butyl-4-hydroxyphenyl)propionate] (AO-60, manufactured by ADEKA Corporation) Antioxidant PEP-36: 3,9-Bis(2,6-di-tert-butyl-4-methylphenoxy)-2,4,8,10-tetraoxa-3,9-diphosphaspiro[5.5]undecane (PEP-36, manufactured by ADEKA Corporation) Mold release agent S-100A: Glycerol monostearate (S-100A, manufactured by Riken Vitamin Co., Ltd.) Compounding agent (A) ((A) Dimer in the table): Compound shown below 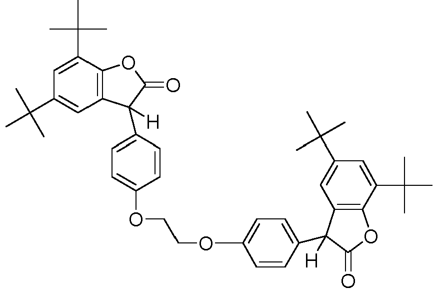 Compounding agent (B) ((B) Monomer in the table): A commercial product manufactured by Tokyo Chemical Industry Co., Ltd., a mixture of compounds represented by the following formulae (mixture of 3,4-dimethyl compound and 2,4-dimethyl compound), was used. 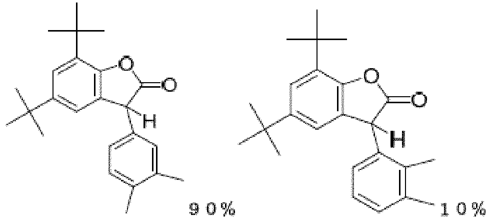 | | | | | | |

### <Examples 2-5, etc.>

Pelletized thermoplastic resins, i.e., polycarbonate resin compositions, were obtained in almost the same manner as in Example 1, using PC2 obtained in Synthesis example 2 and the same raw materials as Example 1 in the mass ratios shown in Table 2. The YI values, transmittance, etc. of the obtained resin compositions were measured and the results are shown in Table 2.

In Examples 2-5, Comparative example 3, and Comparative example 4, the same operations as in Example 1 were performed except that an antioxidant was used as an additive without a mold release agent, TEM-18SS manufactured by Shibaura Machine Co. Ltd. was employed as the twin-screw extruder, and the cylinder temperature and discharge rate were set to 280°C and 6 kg/hour, respectively, during melt-kneading.

**[Table 2]**

| | | | | **Example 2** | **Example 3** | **Example 4** | **Example 5** | **Comparative example 3** | **Comparative example 4** |
|---|---|---|---|---|---|---|---|---|---|
| **Resin** | | | | **PC2** | **PC2** | **PC2** | **PC2** | **PC2** | **PC2** |
| **Mold release agent** | | **S-100A** | | **0** | **0** | **0** | **0** | **0** | **0** |
| **Antioxidant** | **Phosphite-based** | **PEP-36** | | **500** | **500** | **500** | **500** | **0** | **500** |
| | **[ppm]** | | | | | | | | |
| | **Phenolic** | **AO-60** | | **1,000** | **0** | **0** | **0** | **0** | **1,000** |
| | **[ppm]** | | | | | | | | |
| **Compounding agent [ppm]** | | **(A)** | | **200** | **200** | **1,000** | **50** | **0** | **0** |
| | | **Dimer** | | | | | | | |
| | | **(B)** | | **0** | **0** | **0** | **0** | **0** | **0** |
| | | **Monomer** | | | | | | | |
| **Physical properties** | **YI** | | | **0.01** | **-0.21** | **-2.49** | **0.56** | **1.76** | **1.20** |
| | **Haze** | | | **0.15** | **0.22** | **0.13** | **0.14** | **0.28** | **0.17** |
| | **Total transmittance [%]** | | | **88.88** | **88.68** | **86.39** | **89.59** | **89.78** | **90.06** |
| | **Spectral transmittance [%]** | | **400 nm** | **86.39** | **86.20** | **82.84** | **87.91** | **87.10** | **88.42** |
| | | | **390 nm** | **84_28** | **83.84** | **78.21** | **86.79** | **86.20** | **87.96** |
| | | | **380 nm** | **86.39** | **81.14** | **72.75** | **85.54** | **84.99** | **87.30** |

### <Production examples>

### [Synthesis of polyester resins (PEs-1 and PEs-2)]

The raw monomers listed in Table 3 below were fed into a 30 L polyester manufacturing apparatus equipped with a packed column-type distillation column, a partial condenser, a total condenser, a cold trap, a stirrer, a heating device, and a nitrogen inlet tube, and 0.005 mol% tetra-n-butoxytitanium and 0.02 mol% potassium acetate were added to the dicarboxylic acid component. The temperature was increased to 225°C in a nitrogen atmosphere to allow transesterification reaction. Once the reaction conversion rate of the dicarboxylic acid component reached 90% or higher, 0.025 mol% germanium dioxide and 0.05 mol% triethyl phosphate were added to the dicarboxylic acid component, and, gradually, the temperature was increased and the pressure was decreased, finally resulting in polycondensation at 280°C and 0.1 kPa or lower. The reaction was terminated once the melt viscosity reached an appropriate level, thereby synthesizing PEs-1 or PEs-2 polyester resin.

**[Table 3]**

| | | Production example 1 (PEs-1) | Production example 2 (PEs-2) |
|---|---|---|---|
| Monomer feed | | | |
| Dicarboxylic acid component (mol) | | | |
| | DMT | 0 | 49.8 |
| | NDCM | 31.2 | 0 |

| Diol component (mol) | | | |
|---|---|---|---|
| | EG | 35.9 | 89.6 |
| | SPG | 13 | 23.3 |
| | CHDM | 20.3 | 0 |

| Evaluation results of polyester resin | | | |
|---|---|---|---|
| Percentage of unit derived from diol having cyclic acetal skeleton (mol%) | | 38.9 | 44.3 |
| Percentage of unit derived from alicyclic diol (mol%) | | 53.3 | 0 |
| Glass transition temperature (°C) | | 135 | 110 |

The abbreviations in Table 3 are defined as follows.
DMT: Dimethyl terephthalate
NDCM: Dimethyl 2,6-naphthalenedicarboxylate
EG: Ethylene glycol
SPG: 3,9-Bis(1,1-dimethyl-2-hydroxyethyl)-2,4,8,10-tetraoxaspiro[5.5]undecane
CHDM: 1,4-Cyclohexanedimethanol

### (Preparation of kneaded pellets)

Using a twin-screw extruder (manufactured by Technobell, model: KZW15TW-30MG-NH (-700), screw diameter: 15 mmcp, L/D: 30), either polyester resin PEs-1 or PEs-2 synthesized in the above production example and an antioxidant were dry-blended in a predetermined ratio and the mixture was fed from the hopper. A strand was extruded under the following conditions: a cylinder temperature of 210-280°C, a die temperature of 280°C, a screw speed of 60 rpm, and a discharge rate of 1.4 kg/h. After cooling in the air, the strand was pelletized to obtain raw polyester resin pellets and pellets kneaded with additives. The kinds and amounts of the additives are shown in Tables 4 and 5.

The additives used were as follows.
Antioxidant Irganox 1330:
   3,3',3",5,5',5"-Hexa-tert-butyl-α,α',α"-(mesitylene-2,4,6-triyl)tri-p-cresol (Irganox 1330, manufactured by BASF Japan Ltd.)
Antioxidant PEP-36:
   3,9-Bis(2,6-di-tert-butyl-4-methylphenoxy)-2,4,8,10-tetraoxa-3,9-diphosphaspiro[5,5]undecane (PEP-36, manufactured by ADEKA Corporation)

Compounding agent (B) (monomer): Mixture represented by the following formulae (90:10 mixture of 3,4-dimethyl compound and 2,4-dimethyl compound; commercial product manufactured by Tokyo Chemical Industry Co., Ltd.)

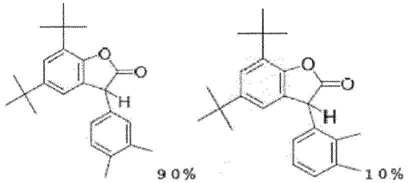

Compounding agent (A) (dimer): Mixture represented by the following formula

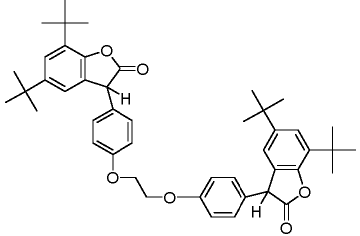

**[Table 4]**

| | | | **Example 6** | **Example 7** | **Comparative example 5** | **Comparative example 6** | **Comparative example 7** |
|---|---|---|---|---|---|---|---|
| **Resin** | | | **PEs-1** | **PEs-1** | **PEs-1** | **PEs-1** | **PEs-1** |
| **Antioxidant** | **Phosphite-based [ppm]** | **PEP-36** | **5,000** | **5,000** | **5,000** | **5,000** | **0** |
| | **Phenolic [ppm]** | **Irganox 1330** | **0** | **3,000** | **0** | **3,000** | **0** |
| **Compounding agent [ppm]** | **Compounding agent 1 (A), dimer** | | **500** | **500** | **0** | **0** | **0** |
| | **Compounding agent 2 (B), monomer** | | **0** | **0** | **500** | **500** | **0** |
| **Physical property** | **YI** | | **11.5** | **16.0** | **13.6** | **16.2** | **17.8** |
| **Amount of volatile component (Peak area value converted per unit weight: Relative value (%) when Comparative Example 5 is set to 100%)** | | **Formaldehyde** | **99** | **125** | **100** | **125** | **1,509** |
| | | **Acetaldehyde** | **92** | **119** | **100** | **122** | **198** |
| | | **Acetone** | **98** | **99** | **100** | **108** | **3,1149** |
| | | **2,3-Butanedione** | **103** | **194** | **100** | **165** | **1,4511** |
| | | **Acetic acid** | **83** | **104** | **100** | **106** | **267** |
| | | **Formic acid** | **158** | **169** | **100** | **171** | **1,745** |

**[Table 5]**

| | | | **Example 8** | **Example 9** | **Comparative example 8** | **Comparative example 9** | **Comparative example 10** |
|---|---|---|---|---|---|---|---|
| **Resin** | | | **PEs-2** | **PEs-2** | **PEs-2** | **PEs-2** | **PEs-2** |
| **Antioxidant** | **Phosphite-based [ppm]** | **PEP-36** | **5,000** | **5,000** | **5,000** | **5,000** | **0** |
| | **Phenolic [ppm]** | **Irganox 133U** | **0** | **3,000** | **0** | **3,000** | **0** |
| **Compounding agent [ppm]** | | **Compounding agent 1 (A), dimer** | **500** | **500** | **0** | **0** | **0** |
| | | **Compounding agent 2 (B), monomer** | **0** | **0** | **500** | **500** | **0** |
| **Physical property** | **YI** | | **7.6** | **7.3** | **10.2** | **9.2** | **16.2** |
| **Amount of volatile component (Peak area value converted per unit weight: Relative value (%) when Comparative Example 8 is set to 100%)** | | **Formaldehyde** | **101** | **110** | **100** | **108** | **9,160** |
| | | **Acetaldehyde** | **111** | **105** | **100** | **106** | **515** |
| | | **Acetone** | **100** | **95** | **100** | **100** | **17,112** |
| | | **2,3-Butanedione** | **93** | **97** | **100** | **91** | **1,387** |
| | | **Acetic acid** | **99** | **100** | **100** | **101** | **1,770** |
| | | **Formic acid** | **87** | **106** | **100** | **116** | **38,486** |

In comparison with the polyester resin compositions according to Comparative examples 5-10, to which monomeric Compounding agent 2 has been added, the effects of reducing YI and reducing volatile components in the pellets after kneading were observed in the polyester resin compositions according to Examples 6-9, to which dimeric Compounding agent 1 has been added.

Furthermore, the effects of reducing the amount of volatile components in these examples were almost the same as those in the comparative examples, confirming that addition of the compounding agent contributed to the reduction effect.

### (Example 10)

Using a twin-screw extruder (manufactured by Shibaura Machine Co. Ltd., model: TEM-18SS), polypropylene (PP manufactured by Japan Polypropylene Corporation, MA3), a nucleating agent (manufactured by Yantai Zhichu New Materials Co., Ltd., 1,3:2,4 bis(3,4-dimethylbenzylidene)-D-sorbitol (abbreviated as DMDBS)), and Compounding agent 1 were dry-blended in the ratio shown in Table 6 below and the mixture was fed from the hopper. A strand was extruded under the following conditions and the strand was pelletized to obtain a thermoplastic resin composition (polypropylene resin composition): a cylinder temperature of 230°C, a screw speed of 300 rpm, and a discharge rate of 6.0 kg/h. The physical property of the obtained resin composition is shown in Table 6.

The following compound, which corresponded to Compounding agent (A) in the above examples, was used as Compounding agent 1.

### Compounding agent 1 (A) (dimer): Compound represented by the following formula

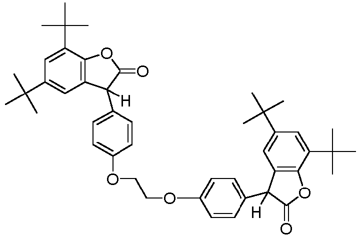

### (Comparative example 11)

A resin composition was obtained in the same manner as in Example 10, except that Compounding agent 1 was replaced with Compounding agent 2 described below. The physical property of the obtained resin composition is shown in Table 6.

### (Comparative example 12)

A resin composition was obtained in the same manner as in Example 10, except that Compounding agent 1 was not added. The physical property of the obtained resin composition is shown in Table 6.

The following compound, which corresponded to Compounding agent (B) in the above examples, was used as Compounding agent 2.

Compounding agent 2 (B) (monomer): Mixture represented by the following formulae (90:10 mixture of 3,4-dimethyl compound and 2,4-dimethyl compound; commercial product manufactured by Tokyo Chemical Industry Co., Ltd.)

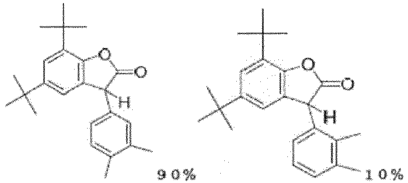

### (Example 11)

A resin composition was obtained in the same manner as in Example 10, except that the amount of Compounding agent 1 was changed to 500 ppm. The physical properties of the obtained resin composition are shown in Table 7.

### (Comparative example 13)

A resin composition was obtained in the same manner as in Example 11, except that Compounding agent 1 was replaced with Compounding agent 2. The physical properties of the obtained resin composition are shown in Table 7.

### (Comparative example 14)

A resin composition was obtained in the same manner as in Example 11, except that Compounding agent 1 was not added. The physical properties of the obtained resin composition are shown in Table 7.

**[Table 6]**

| | | **Example 10** | **Comparative example 11** | **Comparative example 12** |
|---|---|---|---|---|
| **Resin** | | **PP** | **PP** | **PP** |
| **Compounding agent [ppm]** | **Compounding agent 1 (A), dimer** | **100** | **0** | **0** |
| | **Compounding agent 2 (B), monomer** | **0** | **100** | **0** |
| **Nucleating agent [ppm]** | **DMDBS** | **2,000** | **2,000** | **2,000** |
| **Physical property** | **YI value** | **70.8** | **71.8** | **73.5** |

**[Table 7]**

| | | | **Example 11** | **Comparative example 13** | **Comparative example 14** |
|---|---|---|---|---|---|
| **Resin** | | | **PP** | **PP** | **PP** |
| **Compounding agent [ppm]** | | **Compounding agent 1 (A), dimer** | **500** | **0** | **0** |
| | | **Compounding agent 2 (B), monomer** | **0** | **500** | **0** |
| **Nucleating agent [ppm]** | | **DMDBS** | **2,000** | **2,000** | **2,000** |
| **Physical properties** | **YI value** | **Weatherability test: time 0 hours** | **70.9** | **70.9** | **73.5** |
| | | **Weatherability test: time 400 hours** | **75.1** | **75.5** | **78.1** |
| | | **Weatherability test: time 800 hours** | **76.1** | **76.8** | **79.8** |
| | **YI increase rate [%]** | **Weatherability test: time 0 hours** | **0** | **0** | **0** |
| | | **Weatherability, test: time 400 hours** | **5.7** | **6.5** | **6.3** |
| | | **Weatherability test: time 800 hours** | **8.2** | **8.3** | **8.6** |

Not only in comparison with Comparative example 12 without a compounding agent but also in comparison with the polypropylene resin composition according to Comparative example 11, to which monomeric Compounding agent 2 has been added, the effects of reducing YI was observed in the injection molded article obtained from the polypropylene resin composition according to Example 10, to which dimeric Compounding agent 1 has been added.

Furthermore, not only in comparison with Comparative example 14 without a compounding agent but also in comparison with the polypropylene resin composition according to Comparative example 13, to which monomeric Compounding agent 2 has been added, the effects of reducing YI was observed even after the weatherability test in the injection molded article obtained from the polypropylene resin composition according to Example 11, to which dimeric Compounding agent 1 has been added.

## Claims

1. A thermoplastic resin composition comprising a compounding agent represented by General formula (1) below: 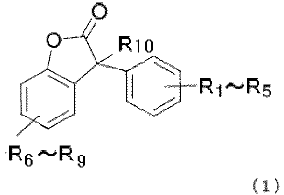
(in General formula (1),
R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
R₆-R₉ each independently represent a hydrogen atom, or an optionally substituted alkyl or alkoxy group having a total of 1-20 carbon atoms, and
R₁₀ represents a hydrogen atom or an alkyl group having a total of 1-5 carbon atoms); 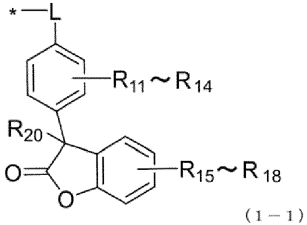
(in General formula (1-1),
R₁₁-R₁₈ each independently represent a hydrogen atom, or an optionally substituted alkyl or alkoxy group having a total of 1-20 carbon atoms,
L is a moiety represented by General formula (L1) or (L2) below: 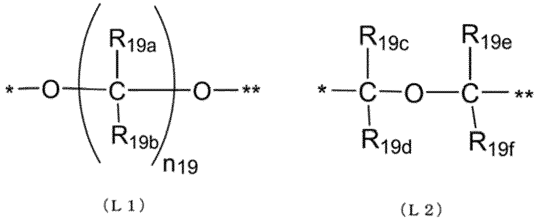
(in Formula (L1),
R₁₉ₐ and R_{19b} each independently represent a hydrogen atom, or an alkyl or alkoxy group having a total of 1-20 carbon atoms, and
n₁₉ represents an integer from 1 to 12, and when n₁₉ is an integer from 2 to 12, the plurality of R₁₉ₐ may be the same or different substituents and the plurality of R_{19b} may be the same or different substituents,
in Formula (L2),
R_{19c}, R_{19d}, R₁₉ₑ, and R_{19f} each independently represent a hydrogen atom, or an alkyl or alkoxy group having a total of 1-20 carbon atoms,
in Formulae (L1) and (L2),
* each represent the position of bonding with the benzene ring containing R₁-R₅ in Formula (1) above, and
** each represent the position of bonding with the benzene ring containing R₁₁-R₁₄ in Formula (1-1) above),
R₂₀ represents a hydrogen atom or an optionally substituted alkyl group having a total of 1-5 carbon atoms, and
* represents the position of bonding with the benzene ring containing R₁-R₅ in Formula (1) above.)

2. The thermoplastic resin composition according to claim 1, further comprising an antioxidant.

3. The thermoplastic resin composition according to claim 2, wherein the antioxidant is a phenolic antioxidant and/or a phosphite-based antioxidant.

4. The thermoplastic resin composition according to either one of claims 2 and 3, wherein the antioxidant is contained in an amount of 1-3,000 ppm by weight based on the total weight of the resin composition.

5. The thermoplastic resin composition according to any one of claims 1 to 4, wherein the compounding agent is contained in an amount of 1-2,000 ppm by weight based on the total weight of the resin composition.

6. The thermoplastic resin composition according to any one of claims 1 to 5, wherein the value of transmittance (%) at a wavelength of 370-400 nm in accordance with JIS K7105 is higher, by 2.0 (%) or more, than that of a reference resin composition having the same composition but without the compounding agent.

7. The thermoplastic resin composition according to any one of claims 1 to 6, wherein the value of transmittance (%) at a wavelength of 370-400 nm in accordance with JIS K7105 is 1.1 times or more higher than that of a reference resin composition having the same composition but without the compounding agent.

8. The thermoplastic resin composition according to any one of claims 1 to 7, wherein:
the amount of a volatile component produced when heated at 250°C for 5 minutes is less than that of a reference resin composition having the same composition but without the compounding agent; and
the volatile component is any of formaldehyde, acetaldehyde, acetone, 2,3-butanedione, acetic acid, and formic acid.

9. The thermoplastic resin composition according to any one of claims 1 to 8, wherein the YI value in accordance with JIS K7105 is 0.20 or more lower than that of a reference resin composition having the same composition but without the compounding agent.

10. The thermoplastic resin composition according to any one of claims 1 to 9, wherein, in General formula (1) above,
four of R₁-R₅ are hydrogen atoms, and one is a moiety represented by a structural formula of General formula (1-1) above,
two of R₆-R₉ are hydrogen atoms and two are alkyl groups, and
R₁₀ is a hydrogen atom.

11. The thermoplastic resin composition according to any one of claims 1 to 10, wherein, in General formulae (1) and (1-1) above, the substituent is any of a halogen, a cyano group, an alkenyl group, an alkynyl group, and an alkoxy group.

12. The thermoplastic resin composition according to any one of claims 1 to 11, further comprising a thermoplastic resin, wherein the thermoplastic resin is selected from the group consisting of a polycarbonate resin, a polyester resin, a polyester carbonate resin, a cyclo-olefin-based resin, and an acrylic resin.

13. The thermoplastic resin composition according to claim 12, wherein the thermoplastic resin is a polycarbonate resin, a polyester resin, or a polyester carbonate resin, which comprises Structural unit (B) derived from a monomer represented by General formula (2) below and/or Structural unit (C) derived from a monomer represented by General formula (3) below: 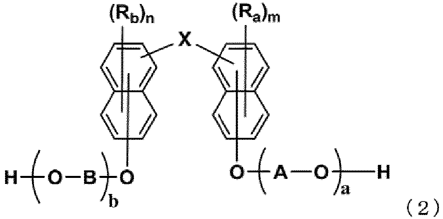
(in General formula (2),
Rₐ and R_{b} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, an optionally substituted aryl group with 6-20 carbon atoms, an optionally substituted heteroaryl group with 6-20 carbon atoms containing one or more heteroatoms selected from O, N, and S, an optionally substituted aryloxy group with 6-20 carbon atoms, and -C≡C-Rₕ,
Rₕ represents an optionally substituted aryl group with 6-20 carbon atoms or an optionally substituted heteroaryl group with 6-20 carbon atoms containing one or more heteroatoms selected from O, N, and S,
X represents a single bond or an optionally substituted fluorene group,
A and B each independently represent an optionally substituted alkylene group with 1-5 carbon atoms,
m and n each independently represent an integer from 0 to 6, and
a and b each independently represent an integer from 0 to 10); 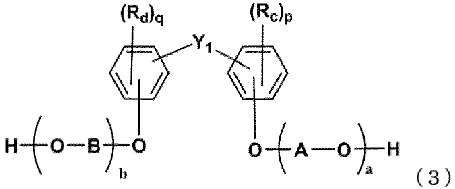
(in General formula (3),
R_{c} and R_{d} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms,
Y₁ is a single bond, an optionally substituted fluorene group, or any of the structural formulae represented by General formulae (4) to (9) below: 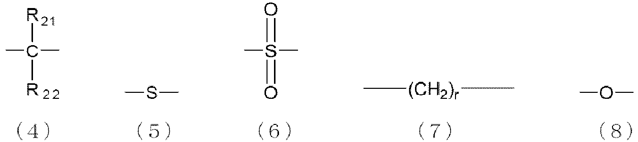 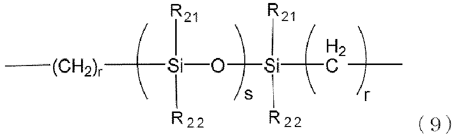
(in General formulae (4)-(9),
R₂₁ and R₂₂ each independently represent a hydrogen atom, a halogen atom, an optionally substituted alkyl group with 1-20 carbon atoms, or an optionally substituted aryl group with 6-30 carbon atoms, or R₂₁ and R₂₂ are bonded together to form an optionally substituted carbon or heterocyclic ring having 1-20 carbon atoms, and
r and s each independently represent an integer from 0 to 5,000,
A and B each independently represent an optionally substituted alkylene group with 1-5 carbon atoms,
p and q each independently represent an integer from 0 to 4, and
a and b each independently represent an integer from 0 to 10.)

14. The thermoplastic resin composition according to either one of claims 12 and 13, wherein the weight-average molecular weight (Mw) of the thermoplastic resin in terms of polystyrene equivalent is 10,000-300,000.

15. The thermoplastic resin composition according to either one of claims 13 and 14, wherein, in General formulae (2) and (3), A and B each independently represent an alkylene group with 2 or 3 carbon atoms.

16. The thermoplastic resin composition according to any one of claims 12 to 15, wherein the thermoplastic resin contains at least a structural unit derived from any one of BPEF, BNE, BNEF, and DPBHBNA.

17. The thermoplastic resin composition according to any one of claims 1 to 16, further comprising a catalyst deactivator.

18. The thermoplastic resin composition according to claim 17, wherein the catalyst deactivator comprises dodecylbenzene sulfonate.

19. The thermoplastic resin composition according to any one of claims 1 to 18, further comprising a mold release agent.

20. The thermoplastic resin composition according to claim 19, wherein the mold release agent is contained in an amount of 1-5,000 ppm by weight based on the total weight of the resin composition.

21. A thermoplastic resin composition comprising a compounding agent represented by General formula (1) below to improve the value of transmittance (%) at a wavelength of 370 nm-400 nm: 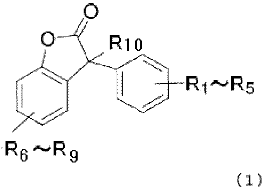
(in General formula (1),
R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
R₆-R₉ each independently represent a hydrogen atom, or an optionally substituted alkyl or alkoxy group having a total of 1-20 carbon atoms, and
R₁₀ represents a hydrogen atom or an alkyl group having a total of 1-5 carbon 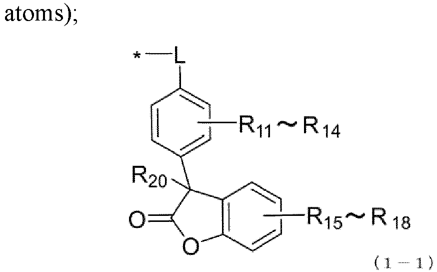
(in General formula (1-1),
R₁₁-R₁₈ each independently represent a hydrogen atom, an optionally substituted alkyl or alkoxy group having a total of 1-20 carbon atoms,
L is a moiety represented by General formula (L1) or (L2) below: 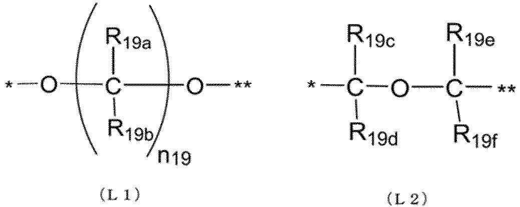
(in Formula (L1),
R₁₉ₐ and R_{19b} each independently represent a hydrogen atom, or an alkyl or alkoxy group having a total of 1-20 carbon atoms, and
n₁₉ represents an integer from 1 to 12, and when n₁₉ is an integer from 2 to 12, the plurality of R₁₉ₐ may be the same or different substituents and the plurality of R_{19b} may be the same or different substituents,
in Formula (L2),
R_{19c}, R_{19d}, R₁₉ₑ, and R_{19f} each independently represent a hydrogen atom, or an alkyl or alkoxy group having a total of 1-20 carbon atoms,
in Formulae (L1) and (L2),
* each represent the position of bonding with the benzene ring containing R₁-R₅ in Formula (1) above, and
** each represent the position of bonding with the benzene ring containing R₁₁-R₁₄ in Formula (1-1) above),
R₂₀ represents a hydrogen atom or an optionally substituted alkyl group having a total of 1-5 carbon atoms, and
* represents the position of bonding with the benzene ring containing R₁-R₅ in Formula (1) above.)

22. A molded article comprising the thermoplastic resin composition according to any one of claims 1 to 21.

23. A method for producing a thermoplastic resin composition, the method comprising a step of adding a compounding agent represented by General formula (1) below to a thermoplastic resin: 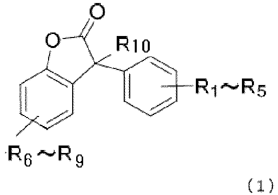
(in General formula (1),
R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
R₆-R₉ each independently represent a hydrogen atom, or an optionally substituted alkyl or alkoxy group having a total of 1-20 carbon atoms, and
R₁₀ represents a hydrogen atom or an alkyl group having a total of 1-5 carbon atoms); 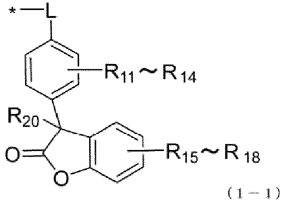
(in General formula (1-1),
R₁₁-R₁₈ each independently represent a hydrogen atom, or an optionally substituted alkyl or alkoxy group having a total of 1-20 carbon atoms,
L is a moiety represented by General formula (L1) or (L2) below: 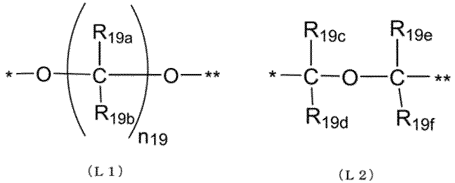
(in Formula (L1),
R₁₉ₐ and R_{19b} each independently represent a hydrogen atom, or an alkyl or alkoxy group having a total of 1-20 carbon atoms, and
n₁₉ represents an integer from 1 to 12, and when n₁₉ is an integer from 2 to 12, the plurality of R₁₉ₐ may be the same or different substituents and the plurality of R_{19b} may be the same or different substituents,
in Formula (L2),
R_{19c}, R_{19d}, R₁₉ₑ, and R_{19f} each independently represent a hydrogen atom, or an alkyl or alkoxy group having a total of 1-20 carbon atoms,
in Formulae (L1) and (L2),
* each represent the position of bonding with the benzene ring containing R₁-R₅ in Formula (1) above, and
** each represent the position of bonding with the benzene ring containing R₁₁-R₁₄ in Formula (1-1) above),
R₂₀ represents a hydrogen atom or an optionally substituted alkyl group having a total of 1-5 carbon atoms, and
* represents the position of bonding with the benzene ring containing R₁-R₅ in Formula (1) above.)

24. A method for improving transmittance of a thermoplastic resin composition, the method comprising a step of adding a compounding agent represented by General formula (1) below to a thermoplastic resin: 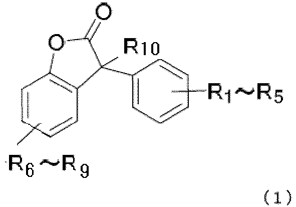
(in General formula (1),
R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
R₆-R₉ each independently represent a hydrogen atom, or an optionally substituted alkyl or alkoxy group having a total of 1-20 carbon atoms, and
R₁₀ represents a hydrogen atom or an alkyl group having a total of 1-5 carbon atoms); 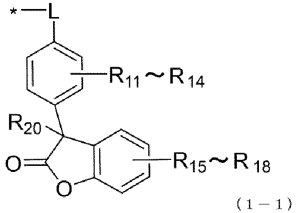
(in General formula (1-1),
R₁₁-R₁₈ each independently represent a hydrogen atom, or an optionally substituted alkyl or alkoxy group having a total of 1-20 carbon atoms,
L is a moiety represented by General formula (L1) or (L2) below: 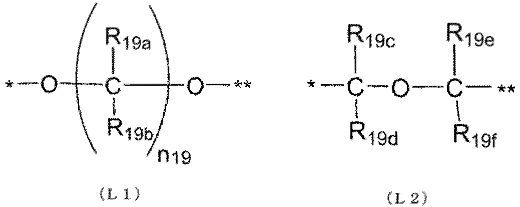
(in Formula (L1),
R₁₉ₐ and R_{19b} each independently represent a hydrogen atom, or an alkyl or alkoxy group having a total of 1-20 carbon atoms, and
n₁₉ represents an integer from 1 to 12, and when n₁₉ is an integer from 2 to 12, the plurality of R₁₉ₐ may be the same or different substituents and the plurality of R_{19b} may be the same or different substituents,
in Formula (L2),
R_{19c}, R_{19d}, R₁₉ₑ, and R_{19f} each independently represent a hydrogen atom, or an alkyl or alkoxy group having a total of 1-20 carbon atoms,
in Formulae (L1) and (L2),
* each represent the position of bonding with the benzene ring containing R₁-R₅ in Formula (1) above, and
** each represent the position of bonding with the benzene ring containing R₁₁-R₁₄ in Formula (1-1) above),
R₂₀ represents a hydrogen atom or an optionally substituted alkyl group having a total of 1-5 carbon atoms, and
* represents the position of bonding with the benzene ring containing R₁-R₅ in Formula (1) above.)

25. A method for improving hue of a thermoplastic resin composition, the method comprising a step of adding a compounding agent represented by General formula (1) below to a thermoplastic resin: 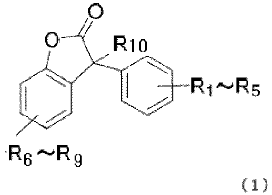
(in General formula (1),
R₁-R₅ each independently represent a hydrogen atom, an optionally substituted alkyl or alkoxy group having a total of 1-20 carbon atoms, or a structural formula of General formula (1-1) below, provided that at least any one of R₁-R₅ is a structural formula of General formula (1-1) below,
R₆-R₉ each independently represent a hydrogen atom, or an optionally substituted alkyl or alkoxy group having a total of 1-20 carbon atoms, and
R₁₀ represents a hydrogen atom or an alkyl group having a total of 1-5 carbon atoms); 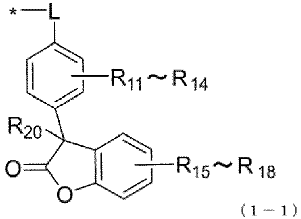
(in General formula (1-1),
R₁₁-R₁₈ each independently represent a hydrogen atom, or an optionally substituted alkyl or alkoxy group having a total of 1-20 carbon atoms,
L is a moiety represented by General formula (L1) or (L2) below: 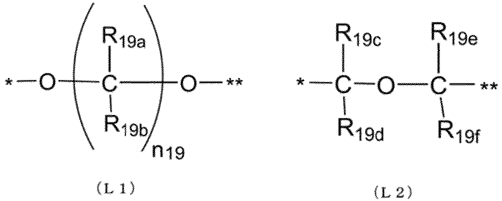
(in Formula (L1),
R₁₉ₐ and R_{19b} each independently represent a hydrogen atom, or an alkyl or alkoxy group having a total of 1-20 carbon atoms, and
n₁₉ represents an integer from 1 to 12, and when n₁₉ is an integer from 2 to 12, the plurality of R₁₉ₐ may be the same or different substituents and the plurality of R_{19b} may be the same or different substituents,
in Formula (L2),
R_{19c}, R_{19d}, R₁₉ₑ, and R_{19f} each independently represent a hydrogen atom, or an alkyl or alkoxy group having a total of 1-20 carbon atoms,
in Formulae (L1) and (L2),
* each represent the position of bonding with the benzene ring containing R₁-R₅ in Formula (1) above, and
** each represent the position of bonding with the benzene ring containing R₁₁-R₁₄ in Formula (1-1) above),
R₂₀ represents a hydrogen atom or an optionally substituted alkyl group having a total of 1-5 carbon atoms, and
* represents the position of bonding with the benzene ring containing R₁-R₅ in Formula (1) above.)
